(19) Europäisches Patentamt
European Patent Office
Office européen des brevets

(11) EP 3 774 958 B1

(12) **FASCICULE DE BREVET EUROPEEN**

(45) Date de publication et mention de la délivrance du brevet:
**05.06.2024 Bulletin 2024/23**

(21) Numéro de dépôt: **19715499.0**

(22) Date de dépôt: **10.04.2019**

(51) Classification Internationale des Brevets (IPC):
***C08F 293/00*** (2006.01) ***C08F 2/10*** (2006.01)
***C08F 2/26*** (2006.01) ***C08F 220/56*** (2006.01)
***C09K 8/68*** (2006.01) ***C09K 8/88*** (2006.01)

(52) Classification Coopérative des Brevets (CPC):
(C-Sets disponibles)
**C08F 2/26; C08F 2/10; C08F 293/005; C09K 8/68; C09K 8/88;** C08F 2438/03 (Cont.)

(86) Numéro de dépôt international:
**PCT/EP2019/059021**

(87) Numéro de publication internationale:
**WO 2019/197435 (17.10.2019 Gazette 2019/42)**

(54) **COMPOSITION AQUEUSE GÉLIFIÉE POUR L'EXTRACTION PÉTROLIÈRE**
GELIERTE WÄSSRIGE ZUSAMMENSETZUNG ZUR ÖLGEWINNUNG
GELLED AQUEOUS COMPOSITION FOR OIL EXTRACTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2018 FR 1853116**

(43) Date de publication de la demande:
**17.02.2021 Bulletin 2021/07**

(73) Titulaire: **Energy Solutions (US) LLC**
**Princeton, NJ 08540 (US)**

(72) Inventeurs:
- **CADIX, Arnaud**
**59800 LILLE (FR)**
- **WILSON, David, James**
**60580 COYE-LA-FÔRET (FR)**

(74) Mandataire: **Osha BWB**
**2, rue de la Paix**
**75002 Paris (FR)**

(56) Documents cités:
**WO-A1-2017/072035** **US-A1- 2016 298 023**

- **DENIZ C. TUNCABOYLU ET AL: "Tough and Self-Healing Hydrogels Formed via Hydrophobic Interactions", MACROMOLECULES, vol. 44, no. 12, 2 juin 2011 (2011-06-02), pages 4997-5005, XP055528091, US ISSN: 0024-9297, DOI: 10.1021/ma200579v**
- **HONG CHEN ET AL: "A Novel Design of Multi-Mechanoresponsive and Mechanically Strong Hydrogels", ADVANCED MATERIALS, vol. 29, no. 21, 15 mars 2017 (2017-03-15) , page 1606900, XP055528073, DE ISSN: 0935-9648, DOI: 10.1002/adma.201606900**
- **CHUANRONG ZHONG ET AL: "Characterization, solution properties, and morphologies of a hydrophobically associating cationic terpolymer", JOURNAL OF POLYMER SCIENCE PART B: POLYMER PHYSICS, vol. 45, no. 7, 22 février 2007 (2007-02-22), pages 826-839, XP055527100, US ISSN: 0887-6266, DOI: 10.1002/polb.21097**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
C08F 220/585, C08F 220/54, C08F 220/56,
C08F 212/08;
C08F 220/585, C08F 220/54, C08F 220/56,
C08F 212/36;
C08F 220/585, C08F 220/54, C08F 220/56,
C08F 220/1812, C08F 212/36;
C08F 220/585, C08F 220/56, C08F 220/54,
C08F 222/385, C08F 220/1812

## Description

La présente invention a trait au domaine de l'extraction pétrolière. Plus précisément, elle concerne un procédé de polymérisation particulier, qui donne accès à des formulations des polymères utilisables notamment pour modifier la rhéologie et le contrôle de filtrat lors d'opération réalisées lors des étapes d'exploration et de production d'hydrocarbures.

Pour modifier la rhéologie et pour assurer le contrôle de filtrat, il est connu d'employer des polymères de type hydrosolubles, en particulier, des compositions dites microgels ou nanogels qui comprennent des polymères dispersés sous forme de particules de dimensions micrométrique ou nanométrique.

US 4,172,066 décrit par exemple l'utilisation d'un microgel à titre d'agent d'épaississant permettant également de réduire la perméabilité de la formation rocheuse. Le microgel comprend de l'eau et un polymère réticulé à base de monomères hydrophiles éthyléniquement insaturés, préparé par la polymérisation en émulsion inversée (water-in-oil polymerization) où la solution aqueuse de monomères est ajoutée dans la phase d'huile sous agitation. Les microgels obtenus à l'issu de la polymérisation sont séparés du milieu réactionnel par ajout d'un agent de floculation et ensuite filtrés, lavés puis séchés avant utilisation.

US 2010/0256018 décrit des microgels synthétisés à partir de monomères hydrophiles et de réticulants hydrophiles, solubles dans le milieu réactionnel. La polymérisation conduit à l'obtention d'une dispersion, les polymères obtenus étant insolubles dans le milieu et se présentant au final sous la forme de particules dispersées (microgel) insolubles.

Ces procédés conduisent généralement à des teneurs en polymère relativement limitées, à savoir, des microgels relativement dilués et présentent des désavantages tels que la nécessité de mettre en oeuvre des méthodes de récupération complexes ou le traitement par des solvants organiques.

Un autre inconvénient de ces procédés est que les microgels obtenus selon les méthodes précitées présentent une stabilité relativement faible, notamment à haute température où une dégradation chimique est souvent observée, (à savoir typiquement à des températures supérieures à 100°C, voire supérieures à 150°C), ce qui est un frein à leur emploi dans une application dans le domaine de l'exploration et production de pétrole où une durée minimum (*e.g.* plusieurs heures, voire plusieurs jours) de stabilité est requise et/ou où la température de mise en oeuvre est généralement élevée.

L'article de D.C. Tuncaboylu et al., "Tough and Self-Healing Hydrogels Formed via Hydrophobie Interactions", Macromolecules (2011), vol. 44, pp. 4997-5005, décrit un exemple de procédé de préparation d'un polymère comprenant une étape de polymérisation radicalaire micellaire.

Un but de la présente invention est de fournir de nouvelles compositions utilisables pour modifier la rhéologie et/ou contrôler les phénomènes de filtration ou la perméabilité de formations rocheuses lors d'opération d'exploration ou de production de pétrole ou de gaz et qui ont de préférence une meilleure stabilité que les microgels décrits dans la passé, et notamment à une température supérieure à 100°C, voire supérieure à 150°C.

A cet effet, la présente invention fournit des compositions de polymères spécifiques à caractère globalement hydrophile, qui sont à la fois réticulés et porteurs de séquences hydrophobes. L'invention fournit également un procédé permettant la synthèse des compositions précitées qui peuvent par exemple être employées à titre d'agent de contrôle de rhéologie et d'agent de contrôle de filtrat.

Plus précisément, selon un premier aspect, la présente invention a pour objet un procédé de préparation d'un polymère qui comprend une étape (E) de polymérisation dans laquelle on met en contact, au sein d'un milieu aqueux (M) :

- des monomères (m1), solubilisés ou dispersés dans ledit milieu aqueux (M), dits monomères hydrophiles ;
- des monomères (m2) sous la forme d'une solution micellaire, à savoir contenant, à l'état dispersé au sein du milieu (M), des micelles comprenant ces monomères (m2), dits monomères hydrophobes ;
  où lesdits monomères (m1) et/ou (m2) comprennent des monomères réticulants (mR) comprenant au moins deux insaturations éthyléniques ;
- au moins un amorceur de polymérisation radicalaire, de préférence hydrosoluble ou hydrodispersible ; et
- de préférence, au moins un agent de contrôle de polymérisation radicalaire.

Le procédé comprenant en outre une étape (E2) après l'étape (E), où les polymères obtenus à l'issue de l'étape (E) sont broyés, ce par quoi on obtient les polymères sous forme de particules dispersables.

Les polymères utilisés dans le cadre de la présente invention ont les caractéristiques particulières des polymères obtenus selon la technique de polymérisation radicalaire micellaire.

Par "polymérisation radicalaire micellaire", on entend au sens de la présente description une polymérisation

qui sera aussi désignée par "polymérisation micellaire" à des fins de concision dans la suite de la description, dans laquelle on synthétise des polymères séquencés de type multiblocs par copolymérisation de monomères hydrophiles et de monomères hydrophobes au sein d'un milieu dispersant aqueux (typiquement de l'eau ou un mélange eau/alcool) qui comprend :

- les monomères hydrophiles à l'état solubilisé ou dispersé dans ledit milieu ;
  et

- les monomères hydrophobes présents au sein de micelles.

Les micelles employées en polymérisation micellaire sont formées dans le milieu aqueux par un tensioactif formant ces micelles, qui est introduit dans ledit milieu à une concentration supérieure à sa concentration micellaire critique (cmc) en présence des monomères hydrophiles dans le milieu (M).

Selon un mode particulier, les monomères hydrophobes présents au sein de micelles employés en polymérisation micellaire peuvent être des monomères qui, en eux-mêmes ont la propriété de former des micelles, sans avoir pour ce faire besoin d'ajouter des agents tensioactifs additionnels (ces monomères sont dits «automicellisables» dans la suite de la description). Selon ce mode particulier, le tensioactif employé pour former les micelles peut être le monomère hydrophobe auto-micellisable lui-même employé sans autre tensioactif, mais la présence d'un tensioactif additionnel n'est cependant pas exclue lorsqu'on emploie des monomères auto-micellisables.

Ainsi, au sens de la présente description, lorsqu'il est fait mention de « monomères hydrophobes au sein de micelles», cette notion englobe notamment :

- mode 1 : des monomères hydrophobes présents au sein de micelles formées par des agents tensioactifs, où lesdits agents tensioactifs sont distincts des monomères hydrophobes ; et fou
- mode 2 : des monomères auto-micellisables formant par eux-mêmes des micelles en milieu aqueux, avec des micelles qui peuvent alors être formées en tout ou partie par lesdits monomères auto-micellisables.

Les modes 1 et 2 précités sont compatibles et peuvent coexister (monomères hydrophobes non auto-micellisables au sein de micelles formées par un autre monomère auto-micellisable par exemple ; ou bien encore micelles comprenant une association d'agents tensioactifs et de monomères auto-micellisables).

En polymérisation micellaire, quelle que soit la nature exacte des micelles, les monomères hydrophobes contenus dans les micelles sont dits en "solution micellaire". La solution micellaire à laquelle il est fait référence est un système micro-hétérogène qui est généralement isotrope, optiquement transparent et thermodynamiquement stable.

A noter qu'une solution micellaire du type de celle employée en polymérisation micellaire est à distinguer d'une microémulsion. En particulier, contrairement à une microémulsion, une solution micellaire se forme à toute concentration dépassant la concentration micellaire critique du tensioactif employé, avec comme seule condition que le monomère hydrophobe soit soluble au moins en une certaine mesure au sein de l'espace interne des micelles. Une solution micellaire se différencie par ailleurs d'une émulsion de par l'absence de phase homogène interne : les micelles contiennent un très faible nombre de molécules (moins de 1000 typiquement, en général moins de 500 et typiquement de 1 à 100, avec le plus souvent 1 à 50 monomères et au plus quelques centaine de molécules de tensioactif lorsqu'un tensioactif est présent) et la solution micellaire a en général des propriétés physiques similaires à celles des micelles de tensioactif sans monomères. Par ailleurs le plus souvent, une solution micellaire est transparente vis-à-vis de la lumière visible, compte tenu de la faible taille des micelles qui ne conduit pas à des phénomènes de diffusion, contrairement aux gouttes d'une émulsion, qui diffusent la lumière et lui confère son aspect trouble ou blanc caractéristique. Typiquement, la taille de micelles dans la solution micellaire est moins de 50 nanomètres, voire moins de 10 nanomètres.

La technique de polymérisation micellaire conduit à des polymères séquencés caractéristiques qui contiennent chacun plusieurs blocs hydrophobes sensiblement de même taille et où cette taille peut être contrôlée. En effet, compte tenu du confinement des monomères hydrophobes au sein des micelles, chacun des blocs hydrophobes formés et de taille contrôlé et contient sensiblement un nombre $n_H$ défini de monomères hydrophobe, ce nombre $n_H$ pouvant être calculé comme suit (Macromolecular Chem. Physics, 202, 8, 1384-1397, 2001) :

$$n_H = N_{agg} . [M_H] / ( [tensioactif] – cmc)$$

formule dans laquelle :

$N_{agg}$ est le nombre d'agrégation du tensioactif, qui reflète le nombre de tensioactif présent dans chaque micelle ; $[M_H]$ est la concentration molaire en monomère hydrophobe dans le milieu et [tensioactif] est la concentration molaire

en tensioactif dans le milieu ;
cmc désigne la concentration (molaire) micellaire critique dans le milieu réactionnel.

La technique de polymérisation micellaire permet ainsi un contrôle intéressant des motifs hydrophobes introduits dans les polymères formés, à savoir :

- un contrôle global de la fraction molaire d'unités hydrophobes dans le polymère (en modulant le rapport des concentrations des deux monomères); et
- un contrôle plus spécifique du nombre d'unités hydrophobes présentes dans chacun des blocs hydrophobes (en modifiant les paramètres influençant le $n_H$ défini ci-dessus).

Les polymères obtenus en polymérisation micellaire sont des polymères séquencés amphiphiles qui possèdent une structure maîtrisée spécifique, à savoir, schématiquement, à base d'un squelette formé d'unités hydrophiles (hydrosolubles ou hydrodispersdibles) interrompu en différents endroits par des petites séquences hydrophobes, ces séquences hydrophobes ("blocs hydrophobes") étant toutes de nombre d'unités monomères sensiblement identiques.

Compte tenu de l'emploi des monomères particuliers (mR) dans l'étape (E), les polymères obtenus selon l'invention sont en outre réticulés. Les compositions de polymères obtenus selon le procédé de l'invention se présentent de ce fait sous forme d'un gel réticulé chimiquement, désigné également ci-après par le terme de « macrogel ».

Les monomères réticulants (mR) employés dans l'étape (E) peuvent comprendre des monomères réticulants hydrophobes (mR2) qui constituent alors tout ou partie des monomères hydrophobes (m2) et/ou des monomères réticulants hydrophiles (mR1) qui constituent alors en général une partie seulement des monomères hydrophiles (m1).

En autre termes :

- les monomères hydrophobes (m2) peuvent inclure des monomères hydrophobes de type non réticulants (m'2) et/ou des monomères réticulants (mR2) ; et
- les monomères hydrophiles (m1) incluent des monomères hydrophiles de type non réticulants (m'1) et éventuellement des monomères réticulants (mR1) ;

étant entendu que les monomères (m1) et/ou (m2) comprennent au moins des monomères réticulants (mR1 et/ou mR2).

Selon un premier mode de réalisation intéressant, l'étape (E) est conduite en présence de monomères hydrophobes (m2) qui comprennent, voire consistent exclusivement en, des monomères réticulants hydrophobes (mR2). Par exemple, ils peuvent comprendre plus de 90%, par exemple plus de 95%, voire plus de 99% de monomères réticulants hydrophobes (mR2) en masse par rapport à la masse totale des monomères hydrophobes. Les macrogels obtenus selon ce mode de réalisation présente une stabilité thermique est généralement particulièrement élevée.

Selon un deuxième mode compatible avec le premier, (et qu'on combine de préférence dans le cadre de l'invention), l'étape (E) est conduite en présence de monomères hydrophile (m1) dont une partie seulement est constituée de monomères réticulants (mR1). Selon ce mode, les monomères hydrophiles comprennent par exemple moins de 5%, et le plus généralement moins de 1% de monomères (mR1), voire moins de 0,5% en masse, par rapport à la masse totale des monomères hydrophiles.

Ainsi, les monomères employés dans l'étape (E) peuvent consister en :

(i) un mélange de monomères hydrophiles non réticulants (m'1), de monomères hydrophobes non réticulants (m'2), et de monomères hydrophobes réticulants (mR2); ou

(ii) un mélange de monomères hydrophiles non réticulants (m'1), de monomères hydrophiles réticulants (mR1), et de monomères hydrophobes non réticulants (m'2) ; ou

(iii) un mélange de monomères hydrophiles non réticulants (m'1), et de monomères hydrophobes réticulants (mR2) ; ou

(iv) un mélange de monomères hydrophiles non réticulants (m'1), de monomères hydrophiles réticulants (mR1), et de monomères hydrophobes réticulants (mR2) ; ou

(v) un mélange de monomères hydrophiles non réticulants (m'1), de monomères hydrophiles réticulants (mR1), et de monomères hydrophobes non réticulants (m'2), et de monomères hydrophobes réticulants (mR2).

Selon un mode de réalisation particulier, les monomères employés dans l'étape (E) consistent en un mélange de monomères hydrophiles non réticulants (m'1), et de monomères hydrophobes réticulants (mR2).

Selon un autre mode de réalisation particulier, les monomères employés dans l'étape (E) consistent en un mélange de monomères hydrophiles non réticulants (m'1), de monomères hydrophobes non réticulants (m'2), et de monomères hydrophobes réticulants (mR2).

Selon un autre mode de réalisation particulier, les monomères employés dans l'étape (E) consistent en un mélange de monomères hydrophiles non réticulants (m'1), de monomères hydrophiles réticulants (mR1), et de monomères hydrophobes réticulants (mR2).

De façon inattendue, les inventeurs ont découvert que des monomères réticulants (mR) peuvent être mis en oeuvre dans un procédé de polymérisation micellaire radicalaire conventionnelle sans que cela perturbe le mécanisme de polymérisation, ce qui permet d'obtenir les avantages usuels de la polymérisation micellaire radicalaire et qu'ils permettent en plus de fournir de façon efficace des liaisons chimiques covalente entre les chaînes polymères.

Le procédé de l'invention comprend, après l'étape (E), une étape (E2) où les polymères obtenus à l'issue de l'étape (E) sont broyés (par exemple après une étape de séchage), ce par quoi on obtient les polymères sous forme de particules dispersables, de tailles plus réduite, par exemple sous la forme de particules de dimensions inférieures à 200 $\mu$m, plus préférentiellement inférieures à 100 $\mu$m et par exemple supérieures à 0,1 $\mu$m, et plus préférentiellement supérieures à 1 $\mu$m. La taille des particules obtenues peut être mesurée par exemple par la granulométrie laser par voie sèche.

Pour conduire l'étape (E2), il est souhaitable d'éliminer tout ou partie des solvants employés dans l'étape (E). Dans ce cadre, un avantage de la présente invention est que le procédé étant conduit en milieux aqueux, il est plus facile à isoler les polymères à l'issue de la polymérisation, notamment, par rapport aux procédés de préparation par polymérisation en émulsion inversée, décrite ci-dessus, qui nécessite généralement un lourd post-traitement pour séparer les polymères des huiles et/ou du solvants contenus dans le du milieu réactionnel.

La taille de particules obtenues à l'issue de l'étape (E2) peut être modulée par l'intensité de broyage, de façon connue en soi. Lorsqu'un séchage est mis en oeuvre, on obtient le polymère sous forme d'une poudre à l'issue de l'étape (E2). On peut utiliser les moyens de broyages et séchages traditionnels connus de l'homme de métier. A titre d'exemple, on peut citer la technique de séchage en lit fluide et broyage par broyeurs à broches, broyeurs à marteaux, broyeur à boulet, broyage par jet d'air. Ces techniques peuvent être mises en oeuvre selon le mode cryo-broyage.

Les particules de polymères issues de l'étape (E2), une fois dispersées dans l'eau, forment une composition aqueuse gélifiée. Le procédé de l'invention fournit ainsi un accès à une composition aqueuse gélifiée à base de polymères réticulés. Dans la suite de la description, cette composition sera désignée par le terme de « microgel ».

Dans un microgel tel qu'obtenu selon l'invention, les polymères sont sous la forme d'objets dispersés ayant par exemple des dimensions inférieures à 1 000 $\mu$m, par exemple inférieures à 500 $\mu$m, et plus préférentiellement inférieures à 100 $\mu$m et par exemple supérieures à 0,5 $\mu$m, et plus préférentiellement supérieures à 5 $\mu$m. La taille des particules dispersées peut être par exemple mesurée par la méthode de la diffusion dynamique de lumière.

Les microgels obtenus selon l'invention présentent une stabilité thermique importante et typiquement supérieure à celle des microgels divulgués dans les documents précités et ce notamment dans les conditions de température et de pH employés dans le domaine de l'extraction pétrolière. Leurs compositions peuvent être modulées en fonction de la température et/ou du pH du milieu d'application recherchée. Par exemple, les microgels à base de monomère (mR2) sont particulièrement stables thermiquement et ils peuvent être employés à haute température, à savoir par exemple supérieure à 100°C, voire à 150°C.

Ainsi, l'invention donne un accès à des microgels aqueux stables thermiquement, faciles à préparer et à manipuler.

Compte tenu de la stabilité thermique des compositions de polymères selon l'invention, il n'est pas nécessaire d'adapter le taux de réticulant pour assurer un effet suffisant de contrôle de filtrat en fonction de la température d'utilisation (notamment avec l'augmentation de la température), contrairement aux microgels décrits dans US 2010/0256018. Les microgels de l'invention sont utilisables sur de larges gammes de température sans avoir à adapter leurs compostions.

De plus, le procédé de l'invention qui part d'un macrogel, permet d'obtenir, au besoin, des concentrations élevées en particules dans le microgel.

Selon un autre aspect, l'invention concerne le polymère sous la forme des particules dispersables issues de l'étape (E2) et les microgels issus de la dispersion dans l'eau de ces particules.

Le milieu aqueux (M) employé dans l'étape (E) est un milieu comprenant de l'eau, de préférence à hauteur d'au moins 50% en masse, voire au moins 80%, par exemple au moins 90%, voire au moins 95% en masse par rapport à la masse totale du milieu aqueux. Ce milieu aqueux peut éventuellement comprendre d'autres solvants que l'eau, par exemple un alcool miscible à l'eau. Ainsi, le milieu (M) peut être par exemple un mélange hydroalcoolique. Selon une variante possible, le milieu (M) peut comprendre d'autres solvants, de préférence en une concentration où ledit solvant est miscible à l'eau, ce qui peut notamment permettre de réduire la quantité de tensioactifs stabilisants employés. Ainsi, par exemple, le milieu (M) peut comprendre du pentanol, ou tout autre additif permettant de moduler le nombre d'agrégation des tensioactifs. De façon générale, il est préférable que le milieu (M) soit une phase continue d'eau et constituée d'un ou plusieurs solvants et/ou additifs miscibles entre eux et dans l'eau dans les concentrations où ils sont employés.

Généralement, la concentration de monomères (mR) est de 100 à 10 000 ppm (parties par million en masse) en masse par rapport à la masse totale de l'ensemble des monomères présents dans le milieu (M). Préférablement, les monomères (mR) sont employés dans une concentration de 100 à 1000 ppm, de préférence de 200 à 600 ppm, par exemple de 300 à 500 ppm, en masse par rapport à la masse totale de l'ensemble des monomères présents dans le milieu (M).

Par exemple, le rapport molaire (mR)/(m1), qui correspond à la quantité de monomères réticulants (mR) rapportée à la quantité totale de monomères hydrophiles est compris entre 0,01 à 0,1%.

Selon un mode de réalisation préféré, les polymères employés selon l'invention sont des polymères tels qu'obtenus selon une étape (E) de polymérisation radicalaire micellaire qui est spécifiquement une polymérisation radicalaire de type contrôlée, à savoir conduite en présence d'un agent de contrôle de la polymérisation radicalaire. Par *"agent de contrôle de polymérisation radicalaire"* (ou plus simplement *"agent de contrôle*"), on entend, au sens de la présente description, un composé capable de rallonger le temps de vie des chaînes polymères en croissance dans une réaction de polymérisation et, de préférence, de conférer à la polymérisation un caractère vivant ou contrôlé.

Lorsqu'un agent de contrôle de polymérisation radicalaire du type précité est employé, en plus des avantages liés à la mise en oeuvre de la polymérisation micellaire, il s'avère possible de contrôler la masse moléculaire moyenne des polymères tels qu'obtenus à l'issue de l'étape (E) : cette masse peut être contrôlée par la quantité d'agent de contrôle utilisée (pour une quantité donnée de monomères hydrophiles, la masse diminue généralement à mesure que cette quantité augmente).

Ainsi, dans le cas où l'étape met en oeuvre d'un agent de contrôle de polymérisation radicalaire, les macrogels à l'issue de l'étape (E) présentent une masse molaire moyenne contrôlée.

Les inventeurs ont découvert que, dans les conditions de l'étape (E), en dépit de la présence de monomères réticulants et de micelles, on conserve les avantages de la polymérisation radicalaire contrôlée, ce qui permet donc d'accéder à des polymères réticulés ayant une masse molaire moyenne contrôlée.

Par exemple, les polymères synthétisés selon le procédé de l'invention peuvent présenter une masse moléculaire supérieure ou égale à 300 000 g/mol. Notamment en ajustant la concentration initiale en agent de contrôle au sein du milieu (M), l'étape (E) peut par exemple conduire à la synthèse d'un polymère séquencé ayant une masse moléculaire Mn supérieure ou égale à 400 000 g/mol.

Selon un mode de réalisation intéressant du procédé de l'invention, dans l'étape (E), la concentration initiale en agent de contrôle dans le milieu est choisie telle que la masse moléculaire moyenne du polymère synthétisé est en nombre Mn supérieure ou égale à 500 000 g/mol, par exemple supérieure ou égale à 1 000 000 g/mol, ou supérieure ou égale à 2 000 000 g/mol, voire davantage.

Selon un mode de réalisation possible, on peut utiliser dans l'étape (E) un agent de contrôle qui est un agent de contrôle de polymérisation radicalaire de type irréversible, par exemple choisi parmi les mercaptans comme l'acide mercaptopropionique, l'acide thioglycolique, le mercaptoethanol, les alcools primaires ou secondaires comme l'éthanol ou l'isopropanol, ou bien encore l'acide formique et ses sels.

Alternativement, selon un mode de réalisation particulièrement intéressant, l'agent de contrôle employé dans l'étape (E) est un agent de transfert réversible tel que mis en oeuvre dans les polymérisations radicalaires contrôlées désignés sous la terminologie RAFT ou MADIX, qui mettent par exemple en oeuvre un procédé de transfert réversible par addition-fragmentation, comme ceux décrits par exemple dans WO96/30421, WO 98/01478, WO 99/35178, WO 98/58974, WO 00/75207, WO 01/42312, WO 99/35177, WO 99/31144, FR2794464 ou WO 02/26836.

Lorsqu'un agent de contrôle de polymérisation radicalaire de type réversible est employé, les polymères tels qu'obtenus à l'issue de l'étape (E) présentent, en plus des avantages liés à la mise en oeuvre de la polymérisation micellaire (à savoir le contrôle de la fraction molaire d'unités hydrophobe dans les polymères ; et (ii) un contrôle du nombre d'unités hydrophobes dans chaque séquence hydrophobe) :

- un contrôle de la masse moléculaire moyenne (qui peut être finement contrôlée par la quantité d'agent de contrôle utilisé : pour une quantité donnée de monomères hydrophiles, la masse diminue à mesure que cette quantité augmente) ; et

- un contrôle de la distribution des blocs hydrophobes au sein des différentes chaînes

- l'obtention de chaînes polymères à caractère vivant, offrant la possibilité de préparer des polymères complexes à architecture contrôlée.

Ces avantages sont tout particulièrement marqués lorsque l'agent de contrôle de polymérisation radicalaire employé est un composé soluble ou dispersible dans le milieu aqueux (M) employé dans l'étape (E), et/ou lorsque cet agent de contrôle n'est pas propre à pénétrer dans les micelles de la solution micellaire. Cet effet peut également être observé dans le cas où l'agent de contrôle n'est pas soluble/dispersible dans le milieu (M) ou lorsque l'agent de contrôle

est propre à pénétrer dans les micelles.

Ainsi, dans le cas où l'étape met en oeuvre d'un agent de contrôle du type réversible, les macrogels à l'issue de l'étape (E) présentent, en plus une masse molaire moyenne finement contrôlée, une homogénéité de la répartition de points de réticulation, qui se retrouve dans les particules de microgels.

Les inventeurs ont découvert que ces avantages liés à la mise en oeuvre d'un agent de contrôle réversible sont conservés dans les conditions particulières de l'étape (E), où il n'était pas évident que la présence de micelles et de monomères réticulants ne perturbe pas le mécanisme de polymérisation radicalaire contrôlée.

Selon un mode particulier, l'agent de contrôle employé dans l'étape (E) peut être une chaîne polymère issue d'une polymérisation radicalaire contrôlée et porteuse d'un groupement propre à contrôler une polymérisation radicalaire (chaîne polymère dite de type « vivante », de type bien connu en soi). Ainsi, par exemple, l'agent de contrôle peut être une chaîne polymère (de préférence hydrophile ou hydrodispersible) fonctionnalisée en bout de chaîne par un d'une par un groupe xanthate ou plus généralement comprenant un groupe -SC=S-, par exemple obtenu selon la technologie RAFT/MADIX.

Alternativement, l'agent de contrôle employé dans l'étape (E) est un composé non polymère porteur d'un groupement assurant le contrôle de la polymérisation radicalaire, notamment un groupe thiocarbonylthio -S(C=S)-.

Selon un mode de réalisation intéressant, l'agent de contrôle de polymérisation radicalaire employé dans l'étape (E) est un composé qui comprend un groupe thiocarbonylthio -S(C=S)-. Ainsi, par exemple, il peut s'agir d'un composé qui comprend un groupe xanthate (porteur de fonctions -SC=S-O-), par exemple un xanthate. D'autres types d'agent de contrôle employés en polymérisation radicalaire contrôlée peuvent être envisagés (par exemple du type de ceux employés en CMP, en ATRP, ou en NMP).

La mise en oeuvre d'un agent de contrôle de l'étape (E) de ce type dans la réaction de polymérisation permet de maîtriser finement la taille des chaînes polymères et la masse moléculaire et plus particulièrement le taux de réticulation, ce qui permet de moduler de façon très fine et très précise les propriétés du macrogel. Elle induit en outre une homogénéité dans le macrogel synthétisé, ce qui permet d'obtenir à l'issue de l'étape (E2) des particules qui présentent toutes sensiblement les mêmes compositions et propriétés.

Selon une variante particulière, l'agent de contrôle de polymérisation radicalaire employé dans l'étape (E) est un polymère, avantageusement un oligomère, à caractère hydrosoluble ou hydrodispersible et porteur d'un groupe thiocarbonylthio -S(C=S)-, par exemple d'un groupe xanthate -SC=S-O-). Ce polymère, propre à agir à la fois comme agent de contrôle de la polymérisation et comme monomère dans l'étape (E), est également désigné par « pré-polymère » dans la suite de la description. Typiquement, ce pré-polymère est obtenu par polymérisation radicalaire de monomères hydrophiles en présence d'un agent de contrôle porteur d'un groupe thiocarbonylthio -S(C=S)-, par exemple un xanthate. Ainsi, par exemple, selon un mode de réalisation intéressant qui est illustré à la fin de la présente description, l'agent de contrôle employé dans l'étape (E) peut avantageusement être un pré-polymère porteur d'un groupe thiocarbonylthio - S(C=S)-, par exemple d'un groupe xanthate -SC=S-O-, obtenu à l'issue d'une étape ($E^0$) de polymérisation radicalaire contrôlée préalable à l'étape (E). Dans cette étape ($E^0$), on peut par exemple mettre en contact des monomères hydrophiles, avantageusement identiques à ceux mis en oeuvre dans l'étape (E) ; un amorceur de polymérisation radicalaire ; et un agent de contrôle porteur d'un groupe thiocarbonylthio -S(C=S)-, par exemple un xanthate.

La mise en oeuvre de l'étape ($E^0$) précité préalablement à l'étape (E) permet, schématiquement, d'hydrophiliser un grand nombre d'agent de contrôle porteurs de fonctions thiocarbonylthio (par exemple des xanthate, qui sont plutôt hydrophobes par nature), en les convertissant des pré-polymères solubles ou dispersibles dans le milieu (M) de l'étape (E). De préférence, un pré-polymère synthétisé dans l'étape ($E^0$) possède une chaîne polymère courte, par exemple comprenant un enchaînement de moins de 50, voire moins de 25 unités monomères, par exemple entre 2 et 15.

Selon un troisième aspect, l'invention a également pour objet l'utilisation particulière des microgels spécifiques obtenus selon l'invention.

Par exemple, les microgels obtenus selon la présente invention peuvent être employés dans de nombreuses applications dans l'industrie pétrolière. Ils peuvent tout particulièrement être employés à titre d'agents modificateur de propriété rhéologique, notamment à titre d'agent épaississant et/ou à titre d'agent de suspension, en particulier dans des milieux aqueux.

Les microgels peuvent également être employés à titre d'agent de contrôle de filtrat ou de contrôle de perte de circulation (« lost circulation »)

L'invention a également pour objet les procédés de modification de milieux aqueux employant ces microgels à titre d'agent modificateur de rhéologie.

L'invention concerne également les compositions aqueuses comprenant les microgels selon l'invention, qui peuvent notamment être employés lors des étapes d'exploration et de production d'hydrocarbures.

L'invention a aussi pour objet les méthodes employant des compositions aqueuses de ce type pour l'exploration et/ou l'exploitation de gisements de pétrole et/ou de gaz, notamment les méthodes employant une circulation ou une introduction d'une telle composition lors de la formation des puits (exploration) ou lors de leur exploitation.

A titre d'exemple, les compositions aqueuses de l'invention peuvent être utilisées dans un fluide de forage,

fluide de séparation (« spacer »), coulis de ciment, fluide de complétion, ou encore dans un fluide de fracturation, ou un fluide de stimulation ou fluide de contrôle de conformance.

Différentes caractéristiques et modes de réalisation de l'invention vont maintenant être décrits encore plus en détails.

## L'agent de contrôle de polymérisation radicalaire

L'agent de contrôle mis en oeuvre dans l'étape (E) ou, le cas échéant, dans l'étape ($E^0$) du procédé de l'invention est avantageusement un composé porteur d'un groupe thiocarbonylthio -S(C=S)-. Selon un mode de réalisation particulier, l'agent de contrôle peut être porteur de plusieurs groupes thiocarbonylthio. Il peut éventuellement s'agir d'une chaîne polymère porteuse d'un tel groupe.

Ainsi, cet agent de contrôle peut par exemple répondre à la formule (A) ci-dessous :

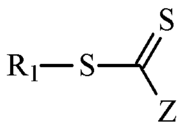

(A)

dans laquelle :

- Z représente :
  - . un atome d'hydrogène,
  - . un atome de Chlore,
  - . un radical alkyl éventuellement substitué, aryl éventuellement substitué,
  - . un hétérocycle éventuellement substitué,
  - . un radical alkylthio éventuellement substitué,
  - . un radical arylthio éventuellement substitué,
  - . un radical alkoxy éventuellement substitué,
  - . un radical aryloxy éventuellement substitué,
  - . un radical amino éventuellement substitué,
  - . un radical hydrazine éventuellement substitué,
  - . un radical alkoxycarbonyl éventuellement substitué,
  - . un radical aryloxycarbonyl éventuellement substitué,
  - . un radical carboxy, acyloxy éventuellement substitué,
  - . un radical aroyloxy éventuellement substitué,
  - . un radical carbamoyle éventuellement substitué,
  - . un radical cyano,
  - . un radical dialkyl- ou diaryl-phosphonato,
  - . un radical dialkyl-phosphinato ou diaryl-phosphinato, ou
  - . une chaîne polymère,

  et
- $R_1$ représente :
  - . un groupe alkyle, acyle, aryle, aralkyle, alcène ou alcyne éventuellement substitué,
  - . un cycle carboné ou un hétérocycle, saturé ou non, aromatique éventuellement substitué, ou
  - . une chaîne polymère, de préférence hydrophile ou hydrodispersible lorsque l'agent est mis en oeuvre dans l'étape (E).

Les groupes $R_1$ ou Z, lorsqu'ils sont substitués, peuvent l'être par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy ($-O_2CR$), carbamoyle ($-CONR_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-NR_2$), halogène, perfluoroalkyle $C_nF_{2n+1}$, allyle, époxy, alkoxy (-OR), S-alkyle, S-aryle, des groupes présentant un caractère hydrophile ou ionique tels que les sels

alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Pour les agents de contrôle de formule (A) mis en oeuvre dans l'étape (E), on préfère en général que le groupe R1 soit de nature hydrophile. Avantageusement, il s'agit d'une chaîne polymère hydrosoluble ou hydrodispersible.

Le groupe R1 peut alternativement être amphiphile, à savoir présenter à la fois un caractère hydrophile et lipophile. Il est préférable que R1 ne soit pas hydrophobe.

Concernant les agents de contrôle de formule (A) mis en oeuvre dans l'étape ($E^0$), $R_1$ peut par exemple être un groupe alkyle substitué ou non, de préférence substitué. Un agent de contrôle de formule (A) mis en oeuvre dans l'étape ($E^0$) peut néanmoins comprendre d'autres types de groupes $R_1$, notamment un cycle ou une chaîne polymère Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque $R_1$ ou Z est une chaîne polymère, cette chaîne polymère peut être issue d'une polymérisation radicalaire ou ionique ou issue d'une polycondensation.

Avantageusement, on utilise comme agent de contrôle pour l'étape (E), ainsi que pour l'étape ($E^0$) le cas échéant, des composés porteurs d'une fonction xanthate -S(C=S)O-, trithiocarbonate, des dithiocarbamate, ou dithiocarbazate, par exemple porteurs d'une fonction O-ethyl xanthate de formule $-S(C{=}S)OCH_2CH_3$ .

Lorsque l'étape ($E^0$) est conduite, il est notamment intéressant d'employer à titre d'agents de contrôle dans cette étape un composé choisi parmi les xanthates, les trithiocarbonates, les dithiocarbamates, ou les dithiocarbazates. Les xanthates se révèlent tout particulièrement intéressants, notamment ceux porteur d'une fonction O-ethyl xanthate $-S(C{=}S)OCH_2CH_3$, comme le O-ethyl-S-(1-methoxycarbonyl ethyl) xanthate $(CH_3CH(CO_2CH_3))S(C{=}S)OEt$. Un autre agent de contrôle possible dans l'étape ($E^0$) est le dibenzyltrithiocarbonate de formule $PhCH_2S(C{=}S)SCH_2Ph$ (où Ph=phényle).

Les pré-polymères vivants obtenus dans l'étape ($E^0$) en utilisant les agents de contrôle précités s'avèrent particulièrement intéressants pour la conduite de l'étape (E).

## Amorçage et conduite des polymérisations radicalaires des étapes (E) et ($E^0$)

Lorsqu'il est mis en oeuvre dans l'étape (E) l'amorceur de la polymérisation radicalaire est de préférence hydrosoluble ou hydrodispersible. Hormis cette condition préférentielle, on peut employer dans l'étape (E) et l'étape ($E^0$) du procédé de l'invention tout amorceur de polymérisation radicalaire (source de radicaux libres) connu en soi et adapté aux conditions choisies pour ces étapes.

Ainsi, l'amorceur (initiateur) de polymérisation radicalaire employé selon l'invention peut par exemple être choisi parmi les initiateurs classiquement utilisés en polymérisation radicalaire. Il peut s'agir par exemple d'un des initiateurs suivants :

- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,

- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyl-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate.

Par exemple, la quantité d'initiateur à utiliser est déterminée de préférence de manière à ce que la quantité de radicaux générés soit d'au plus 50 % en mole, de préférence d'au plus 20% en mole, par rapport à la quantité d'agent de contrôle ou de transfert.

Tout particulièrement dans l'étape (E), il s'avère généralement intéressant d'utiliser un amorceur radicalaire de type redox, qui présente, entre autres, l'avantage de ne pas nécessiter un chauffage du milieu réactionnel (pas d'amorçage thermique) et dont les inventeurs ont en outre maintenant découvert qu'il se révèle adapté à la polymérisation micellaire de l'étape (E).

Ainsi, l'amorceur de polymérisation radicalaire employé l'étape (E) peut par exemple être un amorceur redox, par exemple ne nécessitant pas de chauffage pour leur amorçage thermique. Il s'agit par exemple d'un mélange d'au moins un agent oxydant avec au moins un agent réducteur.

L'agent oxydant présent dans ce système redox est de préférence un agent hydrosoluble. Cet agent oxydant peut par exemple être choisi parmi les peroxydes, tels que : le peroxyde d'hydrogène, l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle ; le persulfate de sodium, le persulfate de potassium, le persulfate d'ammonium, ou bien encore le bromate de potassium.

L'agent réducteur présent dans le système redox est également, de préférence, un agent hydrosoluble. Cet agent réducteur peut par exemple être choisi parmi le formaldéhyde sulfoxylate de sodium (notamment sous sa forme de dihydrate, connue sous le nom de Rongalit ou sous la forme d'un anhydride), l'acide ascorbique, l'acide érythorbique, les sulfites, bisulfites ou métasulfites (sulfites, bisulfites ou métasulfites de métaux alcalins en particulier), les nitrilotrispropionamides, et les amines et ethanolamines tertiaires (de préférence hydrosolubles).

Des systèmes redox possibles comportent des combinaisons telles que :

- les mélanges de persulfates hydrosolubles avec des amines tertiaires hydrosolubles,
- les mélanges de bromates hydrosolubles (bromate de métaux alcalins par exemple) avec des sulfites hydrosolubles (sulfites de métaux alcalins par exemple),
- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Un système redox intéressant comprend (et de préférence consiste en) l'association de persulfate d'ammonium et de formaldéhyde sulfoxylate de sodium.

De façon générale, et en particulier dans le cas de l'utilisation d'un système redox du type persulfate d'ammonium/formaldéhyde sulfoxylate de sodium, il s'avère préférable que le milieu réactionnel de l'étape (E) soit exempt de cuivre. En cas de présence de cuivre, il est en général souhaitable d'ajouter un complexant du cuivre, tel que de l'EDTA, en une quantité propre à masquer sa présence.

Quelle que soit la nature de l'amorceur employé, la polymérisation radicalaire de l'étape ($E^0$) peut être effectuées sous toute forme physique appropriée, par exemple en solution dans l'eau ou dans un solvant par exemple un alcool ou le THF, en émulsion dans l'eau (procédé dit "latex"), en masse, le cas échéant en contrôlant la température et/ou le pH afin de rendre des espèces liquides et/ou solubles ou insolubles.

Après mise en oeuvre de l'étape (E), compte tenu de la mise en oeuvre d'un agent de contrôle, on obtient des polymères fonctionnalisés par des groupes de transfert (polymères vivants). Ce caractère vivant permet si on le souhaite, d'employer ces polymères dans une réaction de polymérisation ultérieure, selon une technique bien connue en soi. Alternativement, au besoin, il est possible de désactiver ou de détruire les groupes de transfert, par exemple par hydrolyse, ozonolyse, ou réaction avec des amines, selon des moyens connus en soi. Ainsi, selon un mode de réalisation particulier, le procédé de l'invention peut comprendre, après l'étape (E), une étape (E1) d'hydrolyse, d'ozonolyse ou de réaction avec des amines, propre à désactiver et/ou détruire tout ou partie des groupes de transfert présents sur le polymère

préparé dans l'étape (E).

**Les monomères hydrophiles (m1)**

Le procédé de l'invention peut être employé avec un très grand nombre de monomères hydrophiles (m1) incluant des monomères de type non réticulants (m'1) et éventuellement des monomères réticulants (mR1).
A titre de monomères (m1) non réticulants, on peut notamment citer les monomères (m1) choisis parmi :

- les acides carboxyliques éthyléniquement insaturés, les acides sulfoniques et les acides phosphoniques, et/ou ses dérivés tels que l'acide acrylique (AA), l'acide méthacrylique, l'acide éthacrylique, l'acide α-chloro-acrylique, l'acide crotonique, l'acide maléique, l'anhydride maléique, l'acide itaconique, l'acide citraconique, l'acide mésaconique, l'acide glutaconique, l'acide aconitique, l'acide fumarique, les monoesters d'acides dicarboxyliques monoéthyléniquement insaturés comportant 1 à 3, de préférence 1 à 2, atomes de carbone, par exemple, le maléate de monométhyl, l'acide vinylsulfonique, l'acide (meth)allylsulfonique, l'acrylate de sulfoéthyl, le méthacrylate de sulfoéthyl, l'acrylate de sulfopropyl, le méthacrylate de sulfopropyl, l'acide 2-hydroxy-3-acryloyloxypropylsulfonique, l'acide 2-hydroxy-3-methacryloyloxypropylsulfonique, les acides styrenesulfoniques, l'acide 2-acrylamido-2-methylpropanesulfonique, l'acide vinylphosphonique, l'acide α-methyl vinylphosphonique et l'acide allylphosphonique ;

- les esters d'acides mono- et di-carboxyliques α,β-éthyléniquement insaturés avec C2-C3-alcanediols, par exemple, l'acrylate de 2-hydroxyethyl, le méthacrylate de 2-hydroxyethyl, l'éthacrylate de 2-hydroxyethyl, l'acrylate de 2-hydroxypropyl, le méthacrylate de 2-hydroxypropyl, l'acrylate de 3-hydroxypropyl, le méthacrylate de 3-hydroxypropyl et les (meth)acrylates de polyalkylène glycol;

- les amides d'acides mono-carboxyliques α,β-éthyléniquement insaturés et leurs dérivés N-alkyl et N,N-dialkyl tels que l'acrylamide, le méthacrylamide, le N-méthyl(meth)acrylamide, le N-ethyl(meth)acrylamide, le N-propyl(meth)acrylamide, le N,N-dimethyl(meth)acrylamide, le N,N-diethyl(meth)acrylamide, le morpholinyl(meth)acrylamide, et le metholyl acrylamide (l'acrylamide et le N,N-dimethyl(meth)acrylamide s'avèrent notamment intéressant) ;

- le N-vinyllactames et ses dérivés, par exemple, le N-vinylpryolidone, le N-vinylpiperidone ;

- les composés N-vinylamide à chaînes ouvertes, par exemple, le N-vinylformamide, le N-vinyl-N-methylformamide, le N-vinylacetamide, le N-vinyl-N-methylacetamide, le N-vinyl-N-ethylacetamide, le N-vinylpropionamide, le N-vinyl-N-methylpropionamide et le N-vinylbutyramide ;

- les esters d'acides mono- et di-carboxyliques α,β-éthyléniquement insaturés avec les aminoalcools, par exemple, le (meth)acrylate de N,N-diméthylaminométhyl, le (meth)acrylate de N,N-dimethylaminoethyl, l'acrylate de N,N-diéthylaminoéthyl, et le (meth)acrylate de N,N-dimethylaminopropyl;

- les amides d'acides mono- et di-carboxyliques α,β-éthyléniquement insaturés avec les diamines comprenant au moins un groupe d'amino primaire ou secondaire, tels que le N-[2-(dimethylamino)ethyl]acrylamide, le N[2-(dimethylamino)ethyl]methacrylamide, le N-[3-(dimethylamino)propyl]acrylamide, le N-[3-(dimethylamino)propyl]methacrylamide,

- les hétérocylces azotés substitutés de vinyle et d'allyle, par exemple, le N-vinylimidazole, le N-vinyl-2-methylimidazole, les composés hétéroaromatiques substitués de vinyle et d'allyle, par exemple, le 2- et 4-vinylpyridine, le 2- et 4-allylpyridine, et leurs sels ;

- les acrylamido-sulphobétaines ; et

- les mélanges et association de deux ou plusieurs des monomères précités.

Selon un mode de réalisation particulier, ces monomères peuvent notamment comprendre de l'acide acrylique (AA). Selon un mode de réalisation possible, les monomères sont tous des acides acryliques, mais il est également envisageable de mettre en oeuvre à titre de monomères un mélange comprenant, entre autres, de l'acide acrylique, en mélange avec d'autres monomères hydrophiles.
Les monomères contenant des groupes acides peuvent être utilisés pour la polymérisation sous la forme de l'acide libre ou sous la forme partiellement ou totalement neutralisée. Pour la neutralisation, on peut utiliser, par exemple,

KOH, NaOH, l'ammoniaque ou autre base.

Selon un autre mode de réalisation particulier, les monomères employés dans le procédé de l'invention sont notamment l'acide acrylique, l'acide méthacrylique, et/ou leurs sels, et/ou leurs mélanges.

Selon un autre mode de réalisation, les monomères (m1) mis en oeuvre dans l'étape (E) comprennent (et sont par exemple constitués de) monomères (meth)acrylamide, ou plus généralement des monomères (meth)acrylamido, incluant :

- les monomères acrylamido, à savoir, l'acrylamide, son dérivé sulfonate (AMPS), l'ammonium quaternaire (APTAC) et le sulfopropyl diméthylammonium propyl acrylamide ;
- les monomères methacrylamido, tels que, le sulfopropyl diméthylammonium propyl méthacrylamide (SPP), le sulfohydroxypropyl diméthyl ammonium propyl méthacrylamido.

Selon un mode de réalisation particulier, les monomères m1 de l'étape (E) sont des acrylamides. Un acrylamide employé dans l'étape (E) est de préférence un acrylamide non stabilisé par du cuivre. En cas de présence de cuivre, il est préférable d'introduire un agent complexant du cuivre tel que l'EDTA, le cas échéant de préférence à hauteur de 20 à 2000 ppm. Lorsqu'on utilise des acrylamides dans l'étape (E), ils peuvent par exemple être employée sous forme de poudre, de solution aqueuse (éventuellement, mais non nécessairement, stabilisée par l'éther monométhylique de l'hydroquinone MEHQ, ou bien par des sels de cuivre (de préférence additionnée d'EDTA le cas échéant)).

Par exemple, la concentration initiale en monomères (m1) dans le milieu réactionnel de l'étape (E) peut aller jusqu'à 40% en masse, voire jusqu'à 50% en masse, cette concentration restant en général inférieure à 30% en masse par rapport à la masse totale du milieu réactionnel. Par exemple, la concentration initiale en monomères m1 dans le milieu réactionnel de l'étape (E) est comprise entre 0,5 % et 35%, notamment entre 1 et 20% en masse par rapport à la masse totale du milieu réactionnel.

Selon un mode de réalisation spécifique, les monomères hydrophiles employés dans l'étape (E) sont des macromonomères thermosensibles, insolubles dans l'eau au-delà d'une certaine température (point de trouble ou "cloud point" en anglais), mais solubles à plus faible température, l'étape (E) étant conduite à une température inférieure à la température du point de trouble. Les macromonomères de ce type présentent par exemple une fonction polymérisable de type acrylamido, et une chaîne latérale composée d'enchaînements oxyde d'éthylène ou oxyde de propylène (statistique ou à blocs), ou bien à base de N-isopropylacrylamide, ou de N-vinylcaprolactame. Ce mode de réalisation donne notamment accès à la préparation de polymères présentant des propriétés thermo épaississantes, utilisables par exemple dans l'industrie pétrolière.

Les monomères réticulants hydrophiles (mR1) peuvent être choisis parmi N,N'-méthylènebisacrylamide (MBA), N,N'-ethylenebisacrylamide, di-acrylate polyéthylène glycol (PEG), triacrylate, divinyl ether, par exemple divinyl ether trifonctionnel, par exemple, tri (ethylene glycol) divinyl ether (TEGDE), les N-diallylamines, les N,N-diallyl-N-alkylamines, leurs sels d'additions d'acide et leurs produits de quaternisation, l'alkyl employé ici étant préférentiellement C1-C3-alkyle ; les composés du N,N-diallyl-N-methylamine et du N,N-diallyl-N,N-dimethylammonium, par exemple, les chlorures et les bromures ; ou bien encore du trimethylolpropane triacylate ethoxylé, ditrimethylolpropane tetraacrylate (DiTMPTTA).

Selon un mode de réalisation intéressant, les monomères réticulants hydrophiles (mR1) sont choisis parmi les N,N'-méthylènebisacrylamide (MBA), di-acrylate polyéthylène glycol (PEG), triacrylate, divinyl ether et leurs dérivés.

## Les monomères hydrophobes (m2)

Ces monomères, mis en oeuvre dans l'étape (E) sous la forme d'une solution micellaire, à savoir contenant, à l'état dispersé au sein du milieu (M), des micelles comprenant ces monomères hydrophobes. Sous réserve qu'ils puissent être intégrés dans des micelles de ce type, tout monomère de nature hydrophobe peut être envisagé dans l'étape (E).

Ces monomères hydrophobes ont par exemple une solubilité inférieure à 1 000 ppm, par exemple inférieure à 500 ppm, voire inférieure à 100 ppm dans le milieu réactionnel à la température de mise en oeuvre l'étape (E).

Les monomères hydrophobes (m2) peuvent inclure des monomères de type non réticulants (m'2) et/ou des monomères réticulants (mR2).

A titre de monomères hydrophobes non réticulants (m'2), on peut notamment citer :

- les monomères vinylaromatiques tels que le styrène, l'alpha methylstyrène, le parachlorométhylstyrène, le vinyltoluène, le 2-methylstyrene, le 4-methylstyrene, le 2-(n-butyl)styrene, le 4-(n-decyl)styrene, le 2-(tertio-butyl)styrène ;
- les composés vinyliques halogénés, tels que halogénures de vinyle ou de vinylidène, comme des chlorures ou

fluorure de vinyle ou de vinylidene, répondant à la formule $R_bR_cC=CX^1X^2$,
où : $X^1$ = F ou Cl

$X^2$= H, F ou Cl
chacun de $R_b$ et $R_c$ représente, indépendamment :

- H, Cl, F ; ou
- un groupe alkyle, de préférence chloré et/ou fluoré, plus avantageusement perchloré ou perfluoré ;

- les esters d'acide mono-, di-carboxylique α,β éthyléniquement insaturés avec C2-C30-alcanols, par exemple, l'ethacrylate de methyl, le (meth)acrylate d'ethyl, l'ethacrylate d'ethyl, le (meth)acrylate de n-propyl, le (meth)acrylate d'isopropyl, le (meth)acrylate de n-butyl, le (meth)acrylate de sec-butyl, le (meth)acrylate de tert-butyl, l'ethacrylate de tert-butyl, le (meth)acrylate de n-hexyl, le (meth)acrylate de n-heptyl, le (meth)acrylate de n-octyl, le (meth)acrylate de 1,1,3,3-tetramethylbutyl, le (meth)acrylate d'ethylhexyl, le (meth)acrylate de n-nonyl, le (meth)acrylate de n-decyl, le (meth)acrylate de n-undecyl, le (meth)acrylate de tridecyl, le (meth)acrylate de myristyl, le (meth)acrylate de pentadecyl, le (meth)acrylate de palmityl, le (meth)acrylate de heptadecyl, le (meth)acrylate de nonadecyl, le (meth)acrylate d'arachinyl, le (meth)acrylate de behenyl, le (meth)acrylate de lignoceryl, le (meth)acrylate de cerotinyl, le (meth)acrylate de melissinyl, le (meth)acrylate de palmitoleoyl, le (meth)acrylate d'oleyl, le (meth)acrylate de linolyl, le (meth)acrylate de linolenyl, le (meth)acrylate de stearyl, le (meth)acrylate de lauryl et leurs mélanges ;

- les esters d'alcool de vinyl ou d'allyl avec les acides monocarboxyliques en C1-C30, par exemple, le vinyl formate, le vinyl acétate, le vinyl propionate, le vinyl butyrate, le vinyl laurate, le vinyl stéarate, le vinyl propionate, le vinyl versatate et leurs mélanges ;

- les nitriles éthyléniquement insaturés, tels que l'acrylonitrile, le methacrylonitrile et leurs mélanges ;

- les esters d'acides mono- et di-carboxyliques α,β éthyléniquement insaturés avec l'alcanediols en C3-C30, par exemple, l'acrylate de 2-hydroxypropyl, le méthacrylate de 2-hydroxypropyl, l'acrylate de 3-hydroxypropyl, le méthacrylate de 3-hydroxypropyl, l'acrylate de 3-hydroxybutyl, le méthacrylate de 3-hydroxybutyl, l'acrylate de 4-hydroxybutyl, le méthacrylate de 4-hydroxybutyl, l'acrylate de 6-hydroxyhexyl, le méthacrylate de 6-hydroxyhexyl, l'acrylate 3-hydroxy-2-ethylhexyl et le méthacrylate de 3-hydroxy-2-ethylhexyl ;

- les amides primaires d'acides mono- et di-carboxyliques α,β éthyléniquement insaturés et les dérivés de N-alkyl et N,N-dialkyl, tels que le N- propyl(meth)acrylamide, le N-(n-butyl)(meth)acrylamide, le N-(tert-butyl)(meth)acrylamide, le N-(n octyl)(meth)acrylamide, le N-(1,1,3,3-tetramethylbutyl)(meth)acrylamide, le N-ethylhexyl(meth)acrylamide, le N-(n-nonyl)(meth)acrylamide, le N-(n-decyl)(meth)acrylamide, le N-(n-undecyl)(meth)acrylamide, le N-tridecyl(meth)acrylamide, le N-myristyl(meth)acrylamide, le N-pentadecyl(meth)acrylamide, le N-palmityl(meth)acrylamide, le N-heptadecyl(meth)acrylamide, le N-nonadecyl(meth)acrylamide, le N-arachinyl(meth)acrylamide, le N-behenyl(meth)acrylamide, le N-lignoceryl(meth)acrylamide, le N-cerotinyl(meth)acrylamide, le N-melissinyl(meth)acrylamide, le N-palmitoleoyl(meth)acrylamide, le N-oleyl(meth)acrylamide, le N-linolyl(meth)acrylamide, le N-linolenyl(meth)acrylamide, le N-stearyl(meth)acrylamide et le N-lauryl(meth)acrylamide ;

- les N-vinyllactams et ses dérivées tels que, le N-vinyl-5-ethyl-2-pyrrolidone, le N-vinyl-6-methyl-2-piperidone, le N-vinyl-6-ethyl-2-piperidone, le N-vinyl-7-methyl-2-caprolactam et le N-vinyl-7-ethyl-2-caprolactam ;

- les esters d'acides mono- et di-carboxyliques α,β éthyléniquement insaturés avec aminoalcools, par exemple, le (meth)acrylate de N,N-dimethylaminocyclohexyl; et

- les amides d'acides mono- et di-carboxyliques α,β éthyléniquement insaturés avec diamines comprenant au moins un groupe amino primaire ou secondaire, par exemple, le N-[4-(dimethylamino)butyl](meth)acrylamide, le N-[4-(dimethylamino)cyclohexyl] (meth)acrylamide.

Selon un mode de réalisation préférentielle, les monomères hydrophobes non réticulants (m'2) employés selon l'invention, peuvent être choisis parmi :

- les esters alpha-bêta insaturés d'alkyle en C1-C30 alkyle, de préférence d'alkyle en C4-C22, en particulier les acrylates et méthacrylate d'alkyle, comme les acrylates et méthacrylate de méthyle, ethyle, butyle, 2-étylhexyl, isoactyle, lauryle, isodécyle ou stéaryle (le méthacrylate de lauryle en particulier s'avère notamment intéressant) ;

- les amides alpha-bêta insaturés d'alkyle en C1-C30 alkyle, de préférence d'alkyle en C4-C22, en particulier les acrylamide et méthacrylamide d'alkyle, comme les méthyle, ethyle, butyle, 2-étylhexyl, isoactyle, lauryle, isodécyle ou stéaryle acrylamide et methacrylamide (le lauryle methacrylamide en particulier s'avère notamment intéressant) ;
- les esters de vinyle ou d'alcool allylique d'acide carboxyliques saturés tels que les acétate, propionate, versatate, ou stéarate de vinyle ou d'allyle ;
- les nitriles alpha-bêta insaturés contenant de 3 à 12 atomes de carbone, comme l'acrylonitrile ou le methacrylonitrile ; et
- les mélanges et association de deux ou plusieurs des monomères précités.

Selon un mode de réalisation particulier, les monomères hydrophobes non réticulants (m'2) sont choisis parmi : les esters alpha-bêta insaturés d'alkyle en C1-C30 alkyle, de préférence d'alkyle en C4-C22, en particulier les acrylates et méthacrylate d'alkyle, comme les acrylates et méthacrylate de méthyle, ethyle, butyle, 2-étylhexyl, isoactyle, lauryle, isodécyle ou stéaryle (le méthacrylate de lauryle en particulier s'avère notamment intéressant).

Les monomères réticulants hydrophobes (mR2) peuvent être choisis parmi le divinylbenzène (DVB), bisphenol A diacrylate ethoxylé ou propoxylé, dipropylene glycol diacrylate (DPGDA), tripropylene glycol diacrylate (TPGDA), di(meth)acrylate propoxylé, di(meth)acrylate butyloxylé, dimethylacrylamide, 1, 4-butanediol dimethacrylate (BDDMA), 1,6-hexanediol dimethacrylate (HDDMA), 1,3-butylene glycol dimethacrylate (BGDMA), et leurs dérivés.

Selon un mode de réalisation avantageux, les monomères réticulants hydrophobes (mR2) sont choisi parmi le divinylbenzène (DVB), et ses dérivés.

## Tensioactifs

Pour réaliser la solution micellaire des monomères hydrophobes employés dans l'étape (E), on peut employer tout tensioactif adapté, à titre non limitatif, on peut par exemple, employer les tensioactifs choisis dans la liste suivante :

- Les tensioactifs anioniques peuvent être choisis parmi:

  les alkylesters sulfonates, par exemple de formule R-CH($SO_3$M)-$CH_2$COOR', ou les alkylesters sulfates, par exemple de formule R-CH($OSO_3$M)-$CH_2$COOR', où R représente un radical alkyle en $C_8$-$C_{20}$, de préférence en $C_{10}$-$C_{16}$, R' un radical alkyle en $C_1$-$C_6$, de préférence en $C_1$-$C_3$ et M un cation alcalino-terreux, par exemple sodium, ou le cation ammonium. On peut citer tout particulièrement les méthyl ester sulfonates dont le radical R est en $C_{14}$-$C_{16}$;

  les alkylbenzènesulfonates, plus particulièrement en $C_9$-$C_{20}$, les alkylsulfonates primaires ou secondaires, notamment en $C_8$-$C_{22}$, les alkylglycérol sulfonates ;

  les alkylsulfates par exemple de formule $ROSO_3M$, où R représente un radical alkyle ou hydroxyalkyle en $C_{10}$-$C_{24}$, de préférence en $C_{12}$-$C_{20}$ ; M un cation de même définition que ci-dessus, par exemple, dodecyl sulfate de sodium (SDS) ;

  les alkyléthersulfates par exemple de formule $RO(OA)_nSO_3M$ où R représente un radical alkyle ou hydroxyalkyle en $C_{10}$-$C_{24}$, de préférence en $C_{12}$-$C_{20}$ ; OA représentant un groupement éthoxylé et/ou propoxylé ; M représentant un cation de même définition que ci-dessus, n variant généralement de 1 à 4, comme par exemple le lauryléthersulfate avec n = 2 ;

  les alkylamides sulfates, par exemple de formule $RCONHR'OSO_3M$ où R représente un radical alkyle en $C_2$-$C_{22}$, de préférence en $C_6$-$C_{20}$, R' un radical alkyle en $C_2$-$C_3$, M représentant un cation de même définition que ci-dessus, ainsi que leurs dérivés polyalcoxylés (éthoxylés et/ou propoxylés) (alkylamidoether sulfates ;

  les sels d'acides gras saturés ou insaturés, par exemple comme ceux en $C_8$-$C_{24}$, de préférence en $C_{14}$-$C_{20}$ et d'un cation alcalino-terreux, les N-acyl N-alkyltaurates, les alkyliséthionates, les alkylsuccinamates et alkylsulfo succinates, les alkyl glutamates, les monoesters ou diesters de sulfosuccinates, les N-acyl sarcosinates, les polyéthoxycarboxylates ;

  les mono et di esters phosphates, par exemple de formule suivante : $(RO)_x$-P(=O)$(OM)_x$ ou R représente un radical alkyle, alkylaryle, arylalkyle, aryle, éventuellement polyalcoxylés, x et x' étant égaux à 1 ou 2, à la condition que la somme de x et x' soit égale à 3, M représentant un cation alcalino-terreux ;

- Les tensioactifs non ioniques peuvent être choisis parmi:
  les alcools gras alcoxylés ; par exemple les laureth-2, laureth-4, laureth-7, oleth-20, les triglycérides alcoxylés, les acides gras alcoxylés, les esters de sorbitan alcoxylés, les amines grasses alcoxylées, les di(phényl-1 éthyl) phénols

alcoxylés, les tri(phényl-1 éthyl) phénols alcoxylés, les alkyls phénols alcoxylés, les produits résultant de la condensation de l'oxyde d'éthylène avec un composé hydrophobe résultant de la condensation de l'oxyde de propylène avec le propylène glycol, tels les Pluronic commercialisés par BASF ; les produits résultant de la condensation de l'oxyde d'éthylène le composé résultant de la condensation de l'oxyde de propylène avec l'éthylènediamine, tels les Tetronic commercialisés par BASF ; les alkylpolyglycosides comme ceux décrits dans US 4565647 ou les alkylglucosides; les amides d'acides gras par exemple en C8-C20, notamment les monoalkanolamides d'acides gras, par exemple la cocamide MEA ou la cocamide MIPA ;

- Les tensioactifs amphotères (amphotères vrais comprenant un groupe ioniques et un groupe potentiellement ionique de charge opposée, ou zwitterioniques comprenant simultanément deux charges opposées) peuvent être:

  les bétaïnes de manière générale, notamment carboxybétaïnes de par exemple la lauryl bétaïne (Mirataine BB de la société Rhodia) ou l'octylbétaïne ou la cocobétaïne (Mirataine BB-FLA de Rhodia); les amidoalkylbétaïnes, comme la cocamidopropyl bétaïne (CAPB) (Mirataine BDJ de la société Rhodia ou Mirataine BET C-30 de Rhodia) ;
  les sulfo-bétaïnes ou sultaines comme la cocamidopropyl hydroxy sultaïne (Mirataine CBS de la société Rhodia) ;
  les alkylamphoacétates et alkylamphodiacétates, comme par exemple comprenant une chaîne coco, lauryle (Miranol C2M Conc NP, C32, L32 notamment, de la société Rhodia) ;
  les alkylamphopropionates ou les alkylamphodipropionates, (Miranol C2M SF) ;
  les alkyl amphohydroxypropyl sultaïnes (Miranol CS),
  les oxide d'alkyl amines, par exemple lauramine oxide (INCI) ;
  le (carboxylatomethyl)hexadecyl dimethylammonium (Mackam CET de la société Solvay);

- Les tensioactifs cationiques peuvent être les sels d'amines grasses primaires, secondaires ou tertiaires, éventuellement polyethoxylées, les sels d'ammonium quaternaires tels que les chlorures ou les bromures de tetraalkylammonium, d'alkylamidoalkylammonium, de trialkylbenzylammonium, de trialkylhydroxyalkylammonium, ou d'alkylpyridinium, les dérivés d'imidazoline, les oxydes d'amines à caractère cationique. Un exemple de tensioactif cationique est le cetrimonium chloride ou bromide (INCI) ;

Les tensioactifs employés selon la présente invention peuvent être des copolymères à blocs contenant au moins un bloc hydrophile et au moins un bloc hydrophobe distinct du bloc hydrophile, avantageusement obtenus selon un procédé de polymérisation où :

($a_0$) on met en présence au sein d'une phase aqueuse au moins un monomère hydrophile (respectivement hydrophobe), au moins une source de radicaux libres et au moins un agent de contrôle de polymérisation radicalaire du type -S(C=S)- ;
($a_1$) on met en contact le polymère obtenu à l'issu de l'étape ($a_0$) avec au moins un monomère hydrophobe (respectivement hydrophile) distinct du monomère employé dans l'étape ($a_0$) et au moins une source de radicaux libres;

ce par quoi on obtient un copolymère dibloc.

Des polymères du type tribloc, ou comprenant davantage des blocs, peuvent éventuellement être obtenus en mettant en oeuvre après l'étape ($a_1$), une étape ($a_2$) dans laquelle, on met en contact le polymère obtenu à l'issu de l'étape (a1) avec au moins un monomère distinct du monomère employé dans l'étape ($a_1$) et au moins une source de radicaux libres ; et plus généralement, en mettant en oeuvre (n+1) étapes du type des étapes ($a_1$) et ($a_2$) précitées et n est un nombre entier allant par exemple de 1 à 3, où dans chaque étape ($a_n$), avec $n\geq1$ : on met en contact le polymère obtenu à l'issu de l'étape ($a_{n-1}$) avec au moins un monomère distinct du monomère employé dans l'étape ($a_{n-1}$) et au moins une source de radicaux libres. On peut par exemple employer selon l'invention des copolymères du type décrits dans WO03068827, WO03068848 et WO2005/021612.

## Utilisation des microgels de l'invention

Les microgels de la présente invention peuvent être utilisés au sein d'une formation souterraine, pour la régulation de la rhéologie dans le domaine de l'exploration et de la production du pétrole et du gaz naturel. Ils peuvent en particulier être employés pour la constitution de fluides de forage, de cimentation, de complétion, de « spacer », de « lost circulation pill », pour la fracturation, pour la stimulation, l'acidification, le contrôle de conformance et pour la récupération assistée du pétrole.

Ils peuvent être par exemple servir d'agents de suspension ou en tant qu'agent assurant un effet de contrôle du filtrat dans des fluides injectés sous pression dans des formations souterraines.

Dans un mode de réalisation, les microgels peuvent être employés pour absorber de l'eau, notamment à titre de super absorbants (ils peuvent contenir plus de 99% d'eau).

Différents aspects et avantages de l'invention seront encore illustrés par les exemples ci-après dans lesquels des polymères ont été préparés selon le procédé de l'invention.

## EXEMPLES

### Exemple 1

**Synthèse des gels de polymères : Etape E**

- (contre-exemple) Le polymère P1 (poly AM/DMA/AMPS/Xa) avec comme masse molaire visée 2 000 000 g/mol a été préparé dans les conditions suivantes :
Dans une bouteille en verre de 2000 mL, on a pesé 521,4 g d'Acrylamide (AM) en solution à 50% massique dans l'eau, 550,5 g d'AMPS en solution à 50% massique dans l'eau, 123,4 g de DimethylAcrylamide (DMA) et 983,1 g d'eau déminéralisée. Après agitation au barreau aimanté de la solution précédemment préparée, on mesure le pH à l'aide d'un pH mètre calibré, le pH de la solution est de 9,9, on l'ajuste à 6,0 à l'aide d'une solution d'acide sulfurique à 10% massique dans l'eau. On ajoute alors 6,87 g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C). Le mélange a été dégazé par bullage d'azote et agité pendant 60 minutes. On a ajouté au milieu, en une fois, 0,33 g de 2,2'-Azobis (2-methylpropionamidine) dihydrochloride, 11,0 g de persulfate de potassium (KPS) (solution aqueuse à 4% en masse) et 4,4g du formaldéhyde sulfoxylate de sodium, sous forme de solution aqueuse à 5% en masse. La solution de KPS a été préalablement dégazé par bullage d'azote pendant 15 minutes. On a alors laissé la réaction de polymérisation se dérouler sans agitation pendant 16 heures.

- (contre-exemple) Le polymère P2 (poly AM/DMA/AMPS/MBA/Xa) contenant 3 unités réticulantes hydrophiles par chaine, avec comme masse molaire visée 2 000 000 g/mol a été préparé dans les conditions suivantes :
Dans une bouteille en verre de 2000 mL, on a pesé 521,2g d'Acrylamide en solution à 50% massique dans l'eau, 550,5 g d'AMPS en solution à 50% massique dans l'eau, 123,4 g de DimethylAcrylamide (DMA), 15,3 g d'une solution de methylenebisacrylamide (MBA) à 0,5% massique dans l'eau et 967,8g d'eau déminéralisée. Après agitation au barreau aimanté de la solution précédemment préparée, on mesure le pH à l'aide d'un pH mètre calibré, le pH de la solution est de 10,0, on l'ajuste à 6,0 à l'aide d'une solution d'acide sulfurique à 10% massique dans l'eau. On ajoute alors 6,87g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C). Le mélange a été dégazé par bullage d'azote et agité pendant 60 minutes. On a ajouté au milieu, en une fois, 0,33g de 2,2'-Azobis (2-methylpropionamidine) dihydrochloride, 11,0 g de persulfate de potassium (KPS) (solution aqueuse à 4% en masse) et 4,4 g du formaldéhyde sulfoxylate de sodium, sous forme de solution aqueuse à 5% en masse. La solution de KPS a été préalablement dégazée par bullage d'azote pendant 15 minutes. On a alors laissé la réaction de polymérisation se dérouler sans agitation pendant 16 heures.

- (contre-exemple) Le polymère P3 (poly AM/DMA/AMPS/TEGDE/Xa) contenant 6 unités réticulantes hydrophiles par chaine, avec comme masse molaire visée 2 000 000 g/mol a été préparé dans les conditions suivantes :
Dans une bouteille en verre de 2000 mL, on a pesé 521,5 g d'Acrylamide en solution à 50% massique dans l'eau, 550,8 g d'AMPS en solution à 50% massique dans l'eau, 123,4 g de DimethylAcrylamide (DMA), 0,2 g de Tri (Ethylene glycol) divinyl ether (TEGDE) et 989,8 g d'eau déminéralisée. Après agitation au barreau aimanté de la solution précédemment préparée, on mesure le pH à l'aide d'un pH mètre calibré, le pH de la solution est de 9,9, on l'ajuste à 6.0 à l'aide d'une solution d'acide sulfurique à 10% massique dans l'eau. On ajoute alors 6,86 g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C). Le mélange a été dégazé par bullage d'azote et agité pendant 60 minutes. On a ajouté au milieu, en une fois, 3,3 g d'une solution aqueuse de 2,2'-Azobis (2-methylpropionamidine) dihydrochloride à 10% en masse, 4,4g de persulfate de sodium (NaPS) (solution aqueuse à 10% en masse) et 2,2g du formaldéhyde sulfoxylate de sodium, sous forme de solution aqueuse à 10% en masse. La solution de NaPS a été préalablement dégazée par bullage d'azote pendant 15 minutes. On a alors laissé la réaction de polymérisation

se dérouler sans agitation pendant 16 heures.

- (contre-exemple) Le polymère P4 (poly AM/DMA/AMPS/Styrene/Xa) contenant 3 unités hydrophobes par chaine, avec comme masse molaire visée 2 000 000 g/mol/ a été préparé dans les conditions suivantes :
Dans une bouteille en verre de 2000 ml on a introduit, à température ambiante (20°C), 15,4g de Stepanol WA extra ; 0,11g de Styrène et 6,7g d'eau déminéralisée. On a laissé agiter à l'aide d'un barreau aimanté, pendant 60 min jusqu'à ce que le Styrène soit parfaitement solubilisé. Dans cette même bouteille en verre de 2000 mL, on a pesé 520,7g d'Acrylamide en solution à 50% massique dans l'eau, 558,7g d'AMPS en solution à 50% massique dans l'eau, 122,8g de DimethylAcrylamide (DMA) et 962,2g d'eau déminéralisée. Après agitation au barreau aimanté de la solution, on mesure le pH à l'aide d'un pH mètre calibré, le pH de la solution est de 9.8, on l'ajuste à 6.0 à l'aide d'une solution d'acide sulfurique à 10% massique dans l'eau. On ajoute alors 6.97g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C). Le mélange a été dégazé par bullage d'azote et agité pendant 60 minutes. On a ajouté au milieu, en une fois, 3,3g d'une solution aqueuse de 2,2'-Azobis (2-methylpropionamidine) dihydrochloride à 10% en masse, 4,4g de persulfate de sodium (NaPS) (solution aqueuse à 10% en masse) et 2,2g du formaldéhyde sulfoxylate de sodium, sous forme de solution aqueuse à 10% en masse. La solution de NaPS a été préalablement dégazée par bullage d'azote pendant 15 minutes. On a alors laissé la réaction de polymérisation se dérouler sans agitation pendant 16 heures.

- (contre-exemple) Le polymère P5 (poly AM/DMA/AMPS/Styrene/Xa) contenant 4,5 unités hydrophobes par chaine, avec comme masse molaire visée 2 000 000 g/mol a été préparé dans les conditions suivantes :
Dans une bouteille en verre de 2000 ml on a introduit, à température ambiante (20°C), 23,0g de Stepanol WA extra ; 0,16g de Styrène et 10,0g d'eau déminéralisée. On a laissé agiter à l'aide d'un barreau aimanté, pendant 60 min jusqu'à ce que le Styrène soit parfaitement solubilisé. Dans cette même bouteille en verre de 2000mL, on a pesé 156,9g d'Acrylamide en solution à 50% massique dans l'eau, 506,1g d'AMPS en solution à 50% massique dans l'eau, 328,3g de DimethylAcrylamide (DMA) et 1159,2g d'eau déminéralisée. Après agitation au barreau aimanté de la solution, on mesure le pH à l'aide d'un pH mètre calibré, le pH de la solution est de 9,9, on l'ajuste à 6,0 à l'aide d'une solution d'acide sulfurique à 10% massique dans l'eau. On ajoute alors 6,87g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C). Le mélange a été dégazé par bullage d'azote et agité pendant 60 minutes. On a ajouté au milieu, en une fois, 3,3g d'une solution aqueuse de 2,2'-Azobis (2-methylpropionamidine) dihydrochloride à 10% en masse, 4,4g de persulfate de sodium (NaPS) (solution aqueuse à 10% en masse) et 2,2g du formaldéhyde sulfoxylate de sodium, sous forme de solution aqueuse à 10% en masse. La solution de NaPS a été préalablement dégazée par bullage d'azote pendant 15 minutes. On a alors laissé la réaction de polymérisation se dérouler sans agitation pendant 16 heures.

- Le polymère P6 (poly AM/DMA/AMPS/DVB/Xa) contenant 6 unités réticulantes hydrophobes par chaine, avec comme masse molaire visée 2 000 000 g/mol a été préparé dans les conditions suivantes :
Dans une bouteille en verre de 2000 ml on a introduit, à température ambiante (20°C), 15,4g de Stepanol WA extra ; 0,17g de Divinyl benzene(DVB) à 80% de pureté et 6,6g d'eau déminéralisée. On a laissé agiter à l'aide d'un barreau aimanté, pendant 60 min jusqu'à ce que le DVB soit parfaitement solubilisé. Dans cette même bouteille en verre de 2000 mL, on a pesé 519,7g d'Acrylamide en solution à 50% massique dans l'eau, 558,6g d'AMPS en solution à 50% massique dans l'eau, 120,8g de DimethylAcrylamide (DMA) et 962,2g d'eau déminéralisée. Après agitation au barreau aimanté de la solution, on mesure le pH à l'aide d'un pH mètre calibré, le pH de la solution est de 9,8, on l'ajuste à 6,0 à l'aide d'une solution d'acide sulfurique à 10% massique dans l'eau. On ajoute alors 6,87g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C). Le mélange a été dégazé par bullage d'azote et agité pendant 60 minutes. On a ajouté au milieu, en une fois, 3,3g d'une solution aqueuse de 2,2'-Azobis (2-methylpropionamidine) dihydrochloride à 10% en masse, 4,4g de persulfate de sodium (NaPS) (solution aqueuse à 10% en masse) et 2,2g du formaldéhyde sulfoxylate de sodium, sous forme de solution aqueuse à 10% en masse. La solution de NaPS a été préalablement dégazée par bullage d'azote pendant 15 minutes. On a alors laissé la réaction de polymérisation se dérouler sans agitation pendant 16 heures.

- Le polymère P7 (poly AM/DMA/AMPS/DVB/Xa) contenant 6 unités réticulantes hydrophobes par chaine, avec comme masse molaire visée 2 000 000 g/mol a été préparé dans les conditions suivantes :

Dans une bouteille en verre de 2000 ml on a introduit, à température ambiante (20°C), 15,4g de Stepanol WA extra ; 0,17g de Divinyl benzene(DVB) à 80% de pureté et 6,6g d'eau déminéralisé. On a laissé agiter à l'aide d'un barreau aimanté, pendant 60 min jusqu'à ce que le DVB soit parfaitement solubilisé. Dans cette même bouteille en verre de 2000 mL, on a pesé 156,9g d'Acrylamide en solution à 50% massique dans l'eau, 506,1g d'AMPS en solution à 50% massique dans l'eau, 328,4g de DimethylAcrylamide (DMA) et 1148,5g d'eau déminéralisée. Après agitation au barreau aimanté de la solution, on mesure le pH à l'aide d'un pH mètre calibré, le pH de la solution est de 9,8, on l'ajuste à 6,0 à l'aide d'une solution d'acide sulfurique à 10% massique dans l'eau. On ajoute alors 6,87g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C). Le mélange a été dégazé par bullage d'azote et agité pendant 60 minutes. On a ajouté au milieu, en une fois, 3,3g d'une solution aqueuse de 2,2'-Azobis (2-methylpropionamidine) dihydrochloride à 10% en masse, 4,4g de persulfate de sodium (NaPS) (solution aqueuse à 10% en masse) et 2,2g du formaldéhyde sulfoxylate de sodium, sous forme de solution aqueuse à 10% en masse. La solution de NaPS a été préalablement dégazée par bullage d'azote pendant 15 minutes. On a alors laissé la réaction de polymérisation se dérouler sans agitation pendant 16 heures.

- Le polymère P8 (poly AM/DMA/AMPS/DVB/Xa) contenant 12 unité réticulantes hydrophobes par chaine, avec comme masse molaire visée 2 000 000 g/mol a été préparé dans les conditions suivantes :
  Dans une bouteille en verre de 2000 ml on a introduit, à température ambiante (20°C), 30,7g de Stepanol WA extra ; 0,341g de Divinyl benzene(DVB) à 80% de pureté et 13,2g d'eau déminéralisée. On a laissé agiter à l'aide d'un barreau aimanté, pendant 60 min jusqu'à ce que le DVB soit parfaitement solubilisé. Dans cette même bouteille en verre de 2000 mL, on a pesé 156,9g d'Acrylamide en solution à 50% massique dans l'eau, 506,1g d'AMPS en solution à 50% massique dans l'eau, 328,4g de DimethylAcrylamide (DMA) et 1148,5g d'eau déminéralisée. Après agitation au barreau aimanté de la solution, on mesure le pH à l'aide d'un pH mètre calibré, le pH de la solution est de 9,8, on l'ajuste à 6,0 à l'aide d'une solution d'acide sulfurique à 10% massique dans l'eau. On ajoute alors 6,87g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C). Le mélange a été dégazé par bullage d'azote et agité pendant 60 minutes. On a ajouté au milieu, en une fois, 3,3g d'une solution aqueuse de 2,2'-Azobis (2-methylpropionamidine) dihydrochloride à 10% en masse, 4,4g de persulfate de sodium (NaPS) (solution aqueuse à 10% en masse) et 2,2g du formaldéhyde sulfoxylate de sodium, sous forme de solution aqueuse à 10% en masse. La solution de NaPS a été préalablement dégazée par bullage d'azote pendant 15 minutes. On a alors laissé la réaction de polymérisation se dérouler sans agitation pendant 16 heures.

- Le polymère P9 (poly AM/DMA/AMPS/LMA/MBA/Xa) contenant 37 unités hydrophobes par chaine et 3 unité réticulantes hydrophiles par chaine, avec comme masse molaire visée 2 000 000 g/mol a été préparé dans les conditions suivantes :
  Dans une bouteille en verre de 2000ml on a introduit, à température ambiante (20°C), 62,7g de Stepanol WA extra ; 3,21g de Laurylmethacrylate (LMA) et 24,4g d'eau déminéralisée. On a laissé agiter à l'aide d'un barreau aimanté, pendant 60 min jusqu'à ce que le LMA soit parfaitement solubilisé. Dans cette même bouteille en verre de 2000mL, on a pesé 517,4g d'Acrylamide en solution à 50% massique dans l'eau, 556,2g d'AMPS en solution à 50% massique dans l'eau, 120,2g de DimethylAcrylamide (DMA), 3,8g d'une solution de methylenebisacrylamide (MBA) à 2% massique dans l'eau et 895.7g d'eau déminéralisée. Après agitation au barreau aimanté de la solution, on mesure le pH à l'aide d'un pH mètre calibré, le pH de la solution est de 9,58, on l'ajuste à 6,0 à l'aide d'une solution d'acide sulfurique à 10% massique dans l'eau. On ajoute alors 6,84g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C). Le mélange a été dégazé par bullage d'azote et agité pendant 60 minutes. On a ajouté au milieu, en une fois, 3,3g d'une solution aqueuse de 2,2'-Azobis (2-methylpropionamidine) dihydrochloride à 10% en masse, 14,7g de persulfate de potassium (KPS) (solution aqueuse à 3% en masse) et 2,2g du formaldéhyde sulfoxylate de sodium, sous forme de solution aqueuse à 10% en masse. La solution de NaPS a été préalablement dégazée par bullage d'azote pendant 15 minutes. On a alors laissé la réaction de polymérisation se dérouler sans agitation pendant 16 heures.

- Le polymère P10 (poly AM/DMA/AMPS/LMA/DVB/Xa) contenant 18 unités hydrophobes par chaine et 6 unités réticulantes hydrophobes par chaine, avec comme masse molaire visée 2 000 000 g/mol a été préparé dans les conditions suivantes :
  Dans une bouteille en verre de 2000ml on a introduit, à température ambiante (20°C), 28,5g de Stepanol WA extra ;

0,346g de divinyl benzène (DVB), 1,47g de Laurylmethacrylate (LMA) et 24,4g d'eau déminéralisée. On a laissé agiter à l'aide d'un barreau aimanté, pendant 180 min jusqu'à ce que le LMA et DVB soient parfaitement solubilisés. Dans cette même bouteille en verre de 2000mL, on a pesé 156,6g d'Acrylamide en solution à 50% massique dans l'eau, 505,3g d'AMPS en solution à 50% massique dans l'eau, 327,6g de DimethylAcrylamide (DMA) et 1145,3g d'eau déminéralisée. Après agitation au barreau aimanté de la solution, on mesure le pH à l'aide d'un pH mètre calibré, le pH de la solution est de 9,58, on l'ajuste à 6,0 à l'aide d'une solution d'acide sulfurique à 10% massique dans l'eau. On ajoute alors 6,84g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C). Le mélange a été dégazé par bullage d'azote et agité pendant 60 minutes. On a ajouté au milieu, en une fois, 3,3g d'une solution aqueuse de 2,2'-Azobis (2-methylpropionamidine) dihydrochloride à 10% en masse, 14,7g de persulfate de potassium (KPS) (solution aqueuse à 3% en masse) et 2,2g du formaldéhyde sulfoxylate de sodium, sous forme de solution aqueuse à 10% en masse. La solution de NaPS a été préalablement dégazée par bullage d'azote pendant 15 minutes. On a alors laissé la réaction de polymérisation se dérouler sans agitation pendant 16 heures.

- Le polymère P11 (poly AM/DMA/AMPS/LMA/DVB/Xa) contenant 37 unités hydrophobes par chaine et 6 unités réticulantes hydrophobes par chaine, avec comme masse molaire visée 2 000 000 g/mol a été préparé dans les conditions suivantes :
  Dans une bouteille en verre de 2000ml on a introduit, à température ambiante (20°C), 56,9g de Stepanol WA extra; 0,33g de divinyl benzène (DVB), 2,91g de Laurylmethacrylate (LMA) et 24,4g d'eau déminéralisée. On a laissé agiter à l'aide d'un barreau aimanté, pendant 180 min jusqu'à ce que le LMA et DVB soient parfaitement solubilisés. Dans cette même bouteille en verre de 2000mL, on a pesé 156,6g d'Acrylamide en solution à 50% massique dans l'eau, 505,3g d'AMPS en solution à 50% massique dans l'eau, 327,6g de DimethylAcrylamide (DMA) et 111,72g d'eau déminéralisée. Après agitation au barreau aimanté de la solution, on mesure le pH à l'aide d'un pH mètre calibré, le pH de la solution est de 9,58, on l'ajuste à 6,0 à l'aide d'une solution d'acide sulfurique à 10% massique dans l'eau. On ajoute alors 6,84g d'une solution de Rhodixan A1 à 1% massique dans l'éthanol. On charge cette nouvelle solution dans un Dewar (3000 ml) équipé d'un couvercle qui permet une étanchéité d'atmosphère, une ancre d'agitation, une sonde de température et une arrivée d'azote, à température ambiante (20°C). Le mélange a été dégazé par bullage d'azote et agité pendant 60 minutes. On a ajouté au milieu, en une fois, 3,3g d'une solution aqueuse de 2,2'-Azobis (2-methylpropionamidine) dihydrochloride à 10% en masse, 14,7g de persulfate de potassium (KPS) (solution aqueuse à 3% en masse) et 2,2g du formaldéhyde sulfoxylate de sodium, sous forme de solution aqueuse à 10% en masse. La solution de NaPS a été préalablement dégazée par bullage d'azote pendant 15 minutes. On a alors laissé la réaction de polymérisation se dérouler sans agitation pendant 16 heures.

**Séchage et broyage : Etape E2**

Les gels de polymères obtenus selon les conditions de synthèse décrites ci-dessus sont découpés et séchés en lit fluide ou sur plateau puis broyés pour obtenir les microgels. Le broyage est effectué en utilisant un broyeur à broche Alpine 160. Les tailles de particules sont déterminées par granulométrie laser en voie sèche sur granulomètre Malvern Mastersizer.

| REF | mR1 (ppm) | mR2 (ppm) | m2 (ppm) | taille de particule (diamètre médian μm) |
|---|---|---|---|---|
| P1 | 0 | 0 | 0 | 57 |
| P2 | 116 | 0 | 0 | 45 |
| P3 | 303 | 0 | 0 | 47 |
| P4 | 0 | 0 | 166 | 59 |
| P5 | 0 | 0 | 242 | 60 |
| P6 | 0 | 258 | 0 | 57 |
| P7 | 0 | 258 | 0 | 96 |
| P8 | 0 | 515 | 0 | 40 |
| P9 | 116 | 0 | 4900 | 51 |
| P10 | 0 | 523 | 2235 | 24 |

(suite)

| REF | mR1 (ppm) | mR2 (ppm) | m2 (ppm) | taille de particule (diamètre médian μm) |
|---|---|---|---|---|
| P11 | 0 | 502 | 4425 | 28 |

**Exemple 2 - évaluation de la stabilité thermique par rhéologie à température élevée**

La stabilité thermique des microgels est évaluée par une mesure directe de leur viscosité sous écoulement à une température constante de 176°C. Un rhéomètre pressurisé modèle 5550 de Chandler Engineering équipé d'un mobile de type B05 est utilisé pour suivre l'évolution de la viscosité des suspensions de microgels au cours du temps à 176°C sous un cisaillement constant de 100s-1. L'étude est menée sur une période de 3 à 4 heures qui est représentative des temps typique d'utilisation dans un fluide de forage, un spacer ou une cimentation.

Dans un premier temps, des suspensions de microgels à 2% sont préparées dans du chlorure de potassium à 2% seul sous agitation d'un barreau magnétique et laissées hydrater pendant 2 heures. Au moment de l'introduction dans le rhéomètre, 200ppm de sodium métabisulfite est ajouté à la solution comme piégeur d'oxygène pour éviter les phénomènes de dégradation oxydatifs non représentatifs des conditions réelles d'utilisation.

| | contre - exemples (viscosité) | | Exemple (viscosité) |
|---|---|---|---|
| REF | P2 | P3 | P6 |
| initiale à 176°C | 240 | 245 | 275 |
| 1hr à 176°C | 160 | 196 | 211 |
| 2hrs à 176°C | 84 | 198 | 170 |
| 3hrs à 176°C | 36 | 242 | 257 |
| 4hrs à 176°C | 31 | 70 | 291 |

Afin de représenter de façon plus réaliste les conditions d'application avec des conditions plus agressives avec un pH très alkalin, de la chaux à 0,1% est ajoutée à la solution de chlorure de potassium. Un vieillissement identique à 176°C est réalisé :

| | contre - exemples (viscocité) | | Exemples (viscosité) | | | | |
|---|---|---|---|---|---|---|---|
| REF | P2 | P3 | P6 | P7 | P8 | P10 | P11 |
| initiale à 176°C | 245 | 258 | 214 | 100 | 179 | 225 | 256 |
| 1hr à 176°C | 220 | 151 | 111 | 91 | 172 | 205 | 229 |
| 2hrs à 176°C | 32 | 270 | 138 | 90 | 167 | 195 | 224 |
| 3hrs à 176°C | 30 | 93 | 142 | 81 | 158 | 190 | 218 |
| 4hrs à 176°C | 28 | 43 | 102 | 74 | / | / | / |
| % viscosité après 3hrs | 12% | 36% | 66% | 81% | 88% | 84% | 85% |

**Exemple 3** - **suspension de particule de baryte**

La capacité améliorée des microgels selon l'invention à suspendre les particules est mise en évidence en utilisant une formulation de type boue de forage dans laquelle des particules de baryte doivent être maintenues en suspension. Dans une solution aqueuse de chlorure de potassium à 2% à laquelle est ajouté 0.1% de chaux ($CaOH_2$), sont dispersés les microgels de polymère issus des exemples de synthèse précédents ainsi que de la baryte. Les formulations sont préparées dans un bécher de 2L sous agitation d'une pâle défloculeuse de diamètre 55mm avec une vitesse de rotation de 400 à 1000 tours par minute.

La préparation des dispersions est résumée dans le tableau ci-dessous :

| produit | masse (g) | ordre d'introduction | temps d'agitation |
|---|---|---|---|
| fluide de base (KCl 2%+Ca(OH)2 0.1%) | 700 | 1 | |
| microgel polymère | 7 | 2 | agitation 15mn |
| Baryte (BaSO4) | 196 | 3 | agitation 15mn |

Les dispersions ainsi obtenues sont ensuite conditionnées 20mn dans un consistomètre atmosphérique (model 1250 de Chandler Engineering) à une température de 88°C. La stabilité de la suspension après conditionnement est évaluée en transférant la dispersion dans une éprouvette bouchée de 100mL qui est placée dans une étuve à 88°C pendant 2 heures.

Après 2 heures d'attente à 88°C, les densités des 10mL en haut ($\rho_{90}$) et 10mL en bas ($\rho_{10}$) de l'éprouvette sont mesurées, le pourcentage d'écart de densité est déterminé en utilisant la formule suivante :

$$\% \Delta\rho = \frac{2(\rho_{10} - \rho_{90})}{(\rho_{10} + \rho_{90})} \times 100$$

Lorsque la stabilité de la suspension est suffisamment bonne c'est-à-dire qu'une sédimentation excessive des particules de baryte n'est pas observée, un test de contrôle de filtration est réalisé à 88°C dans un filtre presse (modèle 170-01-2 fourni par OFITE) sous une pression de 35 bars sur un disque de céramique de pores de 40µm de modèle 170-51 fourni par OFITE instruments. Un contrôle de filtrat est considéré très satisfaisant dans ces conditions si le volume collecté est inférieur à 25mL en 30mn.

| | Contre-exemples | | | | exemples | | | |
|---|---|---|---|---|---|---|---|---|
| REF | P1 | P2 | P4 | P5 | P7 | P9 | P10 | P11 |
| $\% \Delta\rho$ | 27 | 15 | 29 | 32 | 4.2 | 3.7 | 1.8 | 1.8 |
| filtration (mL en 30mn) | / | / | / | / | 13 | 16 | 7 | 10 |

**Revendications**

1. Procédé de préparation d'un polymère, qui comprend une étape (E) de polymérisation radicalaire micellaire, le procédé comprenant la mise en contact, au sein d'un milieu aqueux (M) :

   - de monomères hydrophiles (m1), solubilisés ou dispersés dans ledit milieu aqueux (M); et
   - d'une solution micellaire contenant, à l'état dispersé au sein du milieu (M), des micelles comprenant des monomères hydrophobes (m2);
   où lesdits monomères hydrophiles (m1) et/ou lesdits monomères hydrophobes (m2) comprennent des monomères réticulants (mR) comprenant au moins deux insaturations éthyléniques ;
   - d'au moins un amorceur de polymérisation radicalaire, de préférence hydrosoluble ou hydrodispersible ; et
   - de préférence, d'au moins un agent de contrôle de polymérisation radicalaire ;

   le procédé comprenant en outre une étape (E2) après l'étape (E), où les polymères obtenus à l'issue de l'étape (E) sont broyés, ce par quoi on obtient les polymères sous forme de particules dispersables.

2. Procédé selon la revendication 1, comprenant en outre une étape de séchage avant broyage.

3. Procédé selon la revendication 1 ou la revendication 2, dans lequel les particules dispersables obtenues à l'issue de l'étape (E2) ont des dimensions comprises entre 0,1 µm et 200 µm.

4. Procédé selon l'une quelconque des revendications 1 à 3, où l'étape (E) est conduite en présence de monomères hydrophobes (m2) qui comprennent, voire consistent exclusivement en, des monomères réticulants hydrophobes (mR2).

5. Procédé selon l'une quelconque des revendications 1 à 4, où l'étape (E) est conduite en présence de monomères hydrophiles (m1) dont une partie seulement est constituée de monomères réticulants (mR1).

6. Procédé selon une des revendications 1 à 5, où la concentration de monomères (mR) est de 100 ppm à 1000 ppm, de préférence de 200 à 600 ppm, en masse par rapport à la masse totale de l'ensemble des monomères présents dans le milieu (M).

7. Procédé selon une des revendications 1 à 6, où le rapport molaire (mR)/(m1), correspondant à la quantité de monomères réticulants (mR) rapportée à la quantité totale de monomères hydrophiles est compris entre 0,01 et 0,1%.

8. Procédé selon une des revendications 1 à 7, où l'agent de contrôle de polymérisation radicalaire est un composé qui comprend un groupe thiocarbonylthio -S(C=S), par exemple un xanthate.

9. Procédé selon une des revendications 1 à 8, où les monomères réticulants hydrophobes (mR2) sont choisis parmi le divinylbenzène (DVB) et ses dérivés.

10. Procédé selon une des revendications 1 à 9, où les monomères réticulants hydrophiles (mR1) sont choisis parmi N,N'-méthylènebisacrylamide (MBA), diacrylate polyéthylène glycol (PEG), triacrylate, divinyl ether et leurs dérivés.

11. Polymère sous la forme de particules dispersables, le polymère étant susceptible d'être obtenu à l'issue de l'étape (E2) du procédé de l'une quelconque des revendications 1 à 10.

12. Microgel susceptible d'être obtenu à l'issue d'une dispersion dans l'eau des particules selon la revendication 11.

13. Utilisation d'un microgel selon la revendication 12 au sein d'une formation souterraine.

14. Utilisation d'un microgel selon la revendication 13, où la température est supérieure ou égale à 150°C.

15. Utilisation d'un microgel selon l'une des revendications 12 à 14 à titre d'agent modificateur de la rhéologie et/ou agent de contrôle de filtrat.

**Patentansprüche**

1. Verfahren zur Herstellung eines Polymers, das einen Schritt (E) einer mizellaren radikalischen Polymerisation umfasst, wobei das Verfahren das In-Kontakt-Bringen des Folgenden in einem wässrigen Medium (M) umfasst:

   - hydrophiler Monomere (m1), die im wässrigen Medium (M) gelöst oder dispergiert sind; und
   - einer mizellaren Lösung, die im Medium (M) Mizellen im dispergierten Zustand enthält, die hydrophobe Monomere (m2) umfassen;
   wobei die hydrophilen Monomere (m1) und/oder die hydrophoben Monomere (m2) vernetzende Monomere (mR) umfassen, die mindestens zwei ethylenische Ungesättigtheiten umfassen;
   - mindestens eines Initiators einer radikalischen Polymerisation, der vorzugsweise wasserlöslich oder wasserdispergierbar ist; und
   - vorzugsweise mindestens eines Mittels zur Steuerung der radikalischen Polymerisation;
   wobei das Verfahren nach Schritt (E) außerdem einen Schritt (E2) umfasst, bei dem die aus Schritt (E) erhaltenen Polymere gemahlen werden, wodurch die Polymere in Form von dispergierbaren Partikeln erhalten werden.

2. Verfahren nach Anspruch 1, das weiterhin vor dem Mahlen einen Trockenschritt umfasst.

3. Verfahren nach Anspruch 1 oder Anspruch 2, wobei die aus Schritt (E2) erhaltenen dispergierbaren Partikel Abmessungen zwischen 0,1 μm und 200 μm aufweisen.

4. Verfahren nach einem der Ansprüche 1 bis 3, wobei Schritt (E) in Gegenwart von hydrophoben Monomeren (m2) durchgeführt wird, die hydrophobe vernetzende Monomere (mR2) umfassen oder sogar ausschließlich daraus bestehen.

5. Verfahren nach einem der Ansprüche 1 bis 4, wobei Schritt (E) in Gegenwart von hydrophilen Monomeren (m1)

durchgeführt wird, wobei nur ein Teil davon aus vernetzenden Monomeren (mR1) besteht.

**6.** Verfahren nach einem der Ansprüche 1 bis 5, wobei die Konzentration an Monomeren (mR) von 100 Gew.-ppm bis 1000 Gew.-ppm, vorzugsweise von 200 bis 600 Gew.-ppm, bezogen auf das Gesamtgewicht der Gesamtheit von im Medium (M) vorhandenen Monomeren, beträgt.

**7.** Verfahren nach einem der Ansprüche 1 bis 6, wobei das Stoffmengenverhältnis (mR)/(m1), das der Menge von vernetzenden Monomeren (mR) in Bezug auf die Gesamtmenge der hydrophilen Monomere entspricht, zwischen 0,01 und 0,1 % beträgt.

**8.** Verfahren nach einem der Ansprüche 1 bis 7, wobei es sich beim Mittel zur Steuerung der radikalischen Polymerisation um eine Verbindung handelt, die eine Thiocarbonylthio-, -S(C=S)-, Gruppe, beispielsweise ein Xanthat, umfasst.

**9.** Verfahren nach einem der Ansprüche 1 bis 8, wobei die hydrophoben vernetzenden Monomere (mR2) aus Divinylbenzol (DVB) und Derivaten davon ausgewählt sind.

**10.** Verfahren nach einem der Ansprüche 1 bis 9, wobei die hydrophilen vernetzenden Monomere (mR1) aus N,N-Methylenbisacrylamid (MBA), Polyethylenglycol- (PEG-)diacrylat, Triacrylat, Divinylether und Derivaten davon ausgewählt sind.

**11.** Polymer in Form von dispergierbaren Partikeln, wobei das Polymer aus Schritt (E2) des Verfahrens nach einem der Ansprüche 1 bis 10 erhältlich ist.

**12.** Mikrogel, das aus einer Dispersion in Wasser von Partikeln nach Anspruch 11 erhältlich ist.

**13.** Verwendung eines Mikrogels nach Anspruch 12 in einer unterirdischen Formation.

**14.** Verwendung eines Mikrogels nach Anspruch 13, wobei die Temperatur höher als oder gleich 150 °C ist.

**15.** Verwendung eines Mikrogels nach einem der Ansprüche 12 bis 14 als Rheologieregler und/oder Mittel zur Regulierung von Fitrat.

## Claims

**1.** Process for preparing a polymer, which comprises a micellar radical polymerization step (E), the process comprising a step of contacting the following, in an aqueous medium (M):

- hydrophilic monomers (m1), dissolved or dispersed in said aqueous medium (M); and
- a micellar solution containing, in dispersed form in the medium (M), micelles comprising hydrophobic monomers (m2);
wherein said hydrophilic monomers (m1) and/or said hydrophobic monomers (m2) comprise crosslinking monomers (mR) comprising at least two ethylenic unsaturations;
- at least one radical polymerization initiator, which is preferably water-soluble or water-dispersible; and
- preferably at least one radical polymerization control agent;

the process further comprising a step (E2) after step (E), wherein the polymers obtained at the end of step (E) are milled, whereby the polymers are obtained in the form of dispersible particles.

**2.** Process according to claim 1, further comprising a step of drying before milling.

**3.** Process according to claim 1 or claim 2, wherein the dispersible particles obtained at the end of step (E2) have dimensions of between 0.1 μm and 200 μm.

**4.** Process according to any one of claims 1 to 3, wherein step (E) is carried out in the presence of hydrophobic monomers (m2) which comprise, indeed even consist exclusively of, hydrophobic crosslinking monomers (mR2).

**5.** Process according to any one of claims 1 to 4, wherein step (E) is carried out in the presence of hydrophilic monomers (m1), only a part of which consists of crosslinking monomers (mR1).

**6.** Process according to one of claims 1 to 5, wherein the concentration of monomers (mR) is from 100 ppm to 1000 ppm, preferably from 200 to 600 ppm, by weight relative to the total weight of all the monomers present in the medium (M).

**7.** Process according to one of claims 1 to 6, wherein the molar ratio (mR)/(m1), corresponding to the amount of crosslinking monomers (mR) relative to the total amount of hydrophilic monomers, is of between 0.01 and 0.1%.

**8.** Process according to one of claims 1 to 7, wherein the radical polymerization control agent is a compound which comprises a thiocarbonylthio -S(C=S) group, for example a xanthate.

**9.** Process according to one of claims 1 to 8, wherein the hydrophobic crosslinking monomers (mR2) are chosen from divinylbenzene (DVB) and derivatives thereof.

**10.** Process according to one of claims 1 to 9, wherein the hydrophilic crosslinking monomers (mR1) are chosen from N,N'-methylenebisacrylamide (MBA), polyethylene glycol (PEG) diacrylate, triacrylate, divinyl ether, and derivatives thereof.

**11.** Polymer in the form of dispersible particles, the polymer being capable of being obtained at the end of step (E2) of the process of any one of claims 1 to 10.

**12.** Microgel capable of being obtained as a result of a dispersion in water of the particles according to claim 11.

**13.** Use of a microgel according to claim 12, within an underground formation.

**14.** Use of a microgel according to claim 13, wherein the temperature is greater than or equal to 150°C.

**15.** Use of a microgel according to one of claims 12 to 14, as a rheology modifier and/or a fluid loss control agent.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4172066 A
- US 20100256018 A
- WO 9630421 A
- WO 9801478 A
- WO 9935178 A
- WO 9858974 A
- WO 0075207 A
- WO 0142312 A
- WO 9935177 A
- WO 9931144 A
- FR 2794464
- WO 0226836 A
- US 4565647 A
- WO 03068827 A
- WO 03068848 A
- WO 2005021612 A

### Littérature non-brevet citée dans la description


- **D.C. TUNCABOYLU et al.** Tough and Self-Healing Hydrogels Formed via Hydrophobie Interactions. *Macromolecules,* 2011, vol. 44, 4997-5005
- *Macromolecular Chem. Physics,* 2001, vol. 202 (8), 1384-1397